# EUROPÄISCHE PATENTSCHRIFT

(11) **EP 1 744 855 B1**
(45) Veröffentlichungstag und Bekanntmachung des Hinweises auf die Patenterteilung: **16.01.2008**
(21) Anmeldenummer: 05748576.5
(22) Anmeldetag: 20.04.2005
(51) Int. Cl.: B23Q 1/01, B23Q 11/08, B23Q 1/28

(54) **WERKZEUGMASCHINE**
MACHINE-TOOL
MACHINE-OUTIL

(30) Priorität: 21.04.2004 DE 102004019924; 16.12.2004 DE 102004061058; 22.12.2004 DE 102004062538
(43) Veröffentlichungstag der Anmeldung: 24.01.2007
(73) Patentinhaber: Starragheckert GmbH, 09117 Chemnitz (DE)
(72) Erfinder: SCHOPPE, Eberhard, 09212 Limbach-Oberfrohna (DE); PÖNISCH, Achim, 09573 Augustusburg (DE); NEUBER, Dieter, 09123 Chemnitz (DE); SCHLIEDER, Daniel, 09116 Chemnitz (DE); KEMTER, Heino, 09235 Burkhardtsdorf, OT Kemtau (DE); WEIRAUCH, Frank, 09128 Chemnitz (DE)
(74) Vertreter: Rumrich, Gabriele
(86) Internationale Anmeldenummer: PCT/DE2005/000744
(87) Internationale Veröffentlichungsnummer: WO 2005/102596

(56) Entgegenhaltungen:
- EP-A- 1 166 953
- WO-A-01/84063
- DE-A1- 10 160 014
- DE-A1- 19 857 012
- DE-A1- 19 919 553
- DE-U1- 20 118 937
- DE-U1- 20 121 653
- US-A- 4 998 442
- US-A- 6 089 800
- US-A1- 2001 004 859

## Beschreibung

Die Erfindung betrifft eine Werkzeugmaschine gemäß dem Oberbegriff des Anspruchs 1, wie z.B. aus der EP-A-1 166 953 bekannt.

Aus der DE 101 19 175 A1 ist eine zweispindelige Werkzeugmaschine bekannt, die ein Maschinengestell aufweist, an dem zwei Schlitten in x-und in z-Richtung verfahrbar angeordnet sind. Die beiden Schlitten tragen Spindelköpfe, die unabhängig voneinander bewegbar sind und jeweils ein Werkzeug tragen. Die Schlitten sind außerdem an einem Maschinenständer in y-Richtung verfahrbar. Im vorderen Bereich des Maschinengestells befindet sich wenigstens ein Werkstückträger, auf dem die zu bearbeitenden Werkstücke unmittelbar festgespannt werden. Die Werkstücke werden dabei abwechselnd durch je eines der Werkzeuge oder gleichzeitig bearbeitet.
Bei langen Verfahrwegen der Arbeitsspindel in z-Richtung kann es bei dieser Werkzeugmaschine zu Durchbiegungen der Arbeitsspindel und damit zu Fehlern bei der Bearbeitung kommen.
In der DE 203 01 126 U1 wird das Durchbiegen der Arbeitsspindel verhindert, indem das Werkzeug in z-Richtung unverschiebbar angeordnet ist. Es erfolgt dafür eine Verschiebung des Werkstücks in z-Richtung. Das Werkstück befindet sich dabei auf einem Werkstückträger, der im Arbeitsraum auf einem in z-Richtung verschiebbaren Schlitten angeordnet ist. Allerdings entstehen auch hier bei der Bearbeitung Kräfte (neben den Bearbeitungskräften wirken auch noch Massenträgheitskräfte beim Beschleunigen), die auf Grund der einseitigen Befestigung des Werkstücks ebenfalls zu "Durchbiegungen" und damit zu Fehlern bei der Bearbeitung führen können.
Die Lösungen des Standes der Technik weisen einen relativ großen Abstand des Werkzeugs bzw. Werkstücks zu den Führungen/zu den Antrieben auf. Deshalb muss mittels einer schweren Bauweise und damit einer verminderten Dynamik eine hohe Steifigkeit der Werkzeugmaschine erreicht werden. Nachteilig ist außerdem die nach allen Seiten offene Anordnung der maschinenspezifischen Einrichtungen des bekannten Standes der Technik. Zum Schutz der Umgebung müssen diese Werkzeugmaschinen deshalb von einer zusätzlichen Schutzkabine umgeben werden.

Des Weiteren wird in DE 201 21 653 U1 eine Werkzeugmaschine beschrieben, bei der ein zwischen zwei Seitenwänden eines Maschinengestells angeordneter Werkstücktisch mit einer Lagerwelle schwenkbar um eine horizontale Achse in Antriebsaggregaten gelagert ist. Die Antriebsaggregate befinden sich in den Seitenwänden und nehmen das Lager, den Antriebsmotor für die Lagerwelle, eine Winkelmesseinrichtung sowie ein Federklemmgesperre auf.
Mit diesem Aufbau der Schwenkeinrichtung ist zwar eine torsionssteife und spielfreie Feststellbarkeit des schwenkbaren Werkstücktischs relativ zum Maschinengestell in jeder gewünschten Schwenkposition möglich, es bedeutet aber auch eine hohen apparativen Aufwand. Durch den Einbau des Antriebsaggregates ist zudem die Sicht in den Bearbeitungsraum der Werkzeugmaschine aus seitlicher Richtung versperrt.

Bei der in DE 201 10 420 U1 gezeigten Ausführung einer Schwenkeinrichtung für eine Werkstück-Halteeinrichtung ist der für den Antrieb der Welle der schwenkbaren Werkstück-Halteeinrichtung vorgesehene Motor mit dem Motorgehäuse in einer Aussparung der Seitenwand der Werkzeugmaschine angeordnet. Der Motor - vorzugsweise ein linearer Rundmotor - besitzt einen Direktantrieb, wobei die Werkstück-Halteeinrichtung mit einer Abtriebswelle des Motors starr verbunden ist und von dieser getragen wird.

Das am gesamten Umfang der Aussparung in einem Vollkreis von 360° anliegende Motorlager dient gleichzeitig zur Lagerung der Werkstück-Halteeinrichtung. Die Aussparung ist mit dieser Anordnung der Antriebseinrichtung ausgefüllt und ermöglicht keine Sicht in den Bearbeitungsraum der Werkzeugmaschine. Die Verwendung eines Motors mit einem am gesamten Umfang angeordneten Lager ist zudem relativ teuer. Außerdem erfordern die meisten Bearbeitungsvorgänge keine Schwenkbewegung eines Werkstücktisches um 360°, sondern lediglich ein Schwenken in eine bestimmte Position.
So können mit dieser Lösung der apparative Aufwand und die Gesamtausführung zwar relativ klein gehalten werden, aber ein Zugriff zum Zwecke des Werkstückwechsels oder auch nur ein der Überwachung der Bearbeitungsvorgänge dienender Sichtkontakt durch den Bediener kann immer nur von der Vorderseite aus stattfinden.
Für den Einsatz an Werkzeugmaschinen, die einen seitlichen Zugang oder zumindest einen Sichtkontakt von der Seite erfordern, da ein Herangehen oder der Blick von vorn - aus welchen Gründen auch immer - nicht möglich ist, sind die bekannten Lösungen des Standes der Technik nicht geeignet.

Es ist außerdem üblich, die Schlitten und Führungsbahnen zum Schutz gegen Späne, Kühlflüssigkeit u. dgl. während der Bearbeitung abzudecken. Es kommen dabei bekanntermaßen Abdeckungen, wie z.B. Teleskop- oder RolloAbdeckungen, zum Einsatz, deren Länge in Abhängigkeit von der Bewegung der Schlitten veränderbar ist. Die Teleskopabdeckungen umfassen bekannterweise übereinander schiebbare, U-förmige Blechteile, die beidseitig von einem bewegbaren Maschinenteil angeordnet sind und dessen Führungen übergreifen und somit vor Verschmutzungen schützen (DE OS 36 18 959 A1, DE 103 17 318 A1).

Die DD 201 402 zeigt Teleskopabdeckungen für rechtwinklig zueinander angeordnete Führungsbahnen, bei denen Teleskoprohre eingesetzt werden. Dabei sind zwischen zwei sich gegeneinander verschiebbaren Maschinenteilen Teleskopspindeln in einer Ebene schwenkbar angeordnet, wobei jedes Teleskoprohr ein Abdeckblech besitzt.

Die Teleskopabdeckungen erfordern einen relativ großen Platzbedarf. Sie können deshalb nur dort zum Einsatz kommen, wo zwischen den Maschinenteilen oder Baugruppen genügend Platz vorhanden ist.

In DE 196 16 433 C2 werden deshalb an sich bekannte Rolloabdeckungen eingesetzt, die einen geringeren Platzbedarf und ein kleineres Gewicht als die Teleskopabdeckungen aufweisen. Allerdings benötigen auch die Rolloabdeckungen ein außerhalb der Führungsbahnen angeordnetes Gehäuse, in dem das sich während der Bewegung des Maschinenteils ab- bzw. aufwickelnde Rollo aufgenommen wird.
Nachteilig bei diesen bekannten Einrichtungen zur Abdeckung und zum Schutz der Führungsbahnen und Maschinenteile an Werkzeugmaschinen ist zum einen der zusätzliche Platzbedarf und zum anderen, dass diese Abdeckungen nur dafür vorgesehen sind, die Verschmutzung speziell der Führungsbahnen zu verhindern. Für den Schutz weiterer Teile der Werkzeugmaschine, wie z.B. dort angeordneter Messsysteme, sind sie meist nicht geeignet. Dafür werden Abschirmelemente verwendet, die bestimmte Maschinenbaugruppen oder den gesamten Arbeitsraum von Werkzeugmaschinen vor Verschmutzung mit Spänen und Kühlmittel schützen. So ist es bekannt, die Bedienseite durch Schutzwände abzuschirmen, die für den Zugriff in den Arbeitsraum entlang der Maschine verschieb- bzw. auseinander schiebbar sind. Bei derartigen Arbeitsraumabschirmungen bleibt aber die Werkzeugseite im wesentlichen ungeschützt bzw. es wird auf die weiter oben angeführten Teleskop- oder Rolloabdeckungen zurückgegriffen.

Eine Arbeitsraumabschirmung, die den Arbeitsraum sowohl auf der Werkstückals auch zur Werkzeugseite hin abschirmt, ist in DD 204 873 beschrieben. Die gezeigte Fräsmaschine besitzt dabei ein Querbett, auf dem ein Maschinenständer verfahrbar angeordnet ist. An dem Maschinenständer befindet sich wiederum ein senkrecht verschiebbarer Werkzeugträger. Einer bedienseitig angebrachten Schutzwand sind quer zur Längsbewegung und in der Bewegungsbahn des Werkstückträgers angeordnete, flexible Abschirmelemente zugeordnet. Für die Werkzeugseite ist eine komplementäre, die Führungsbahnen von Querbett und Maschinenständer gleichzeitig schützende Abdeckung vorgesehen, die durch parallel zur Schutzwand bewegliche Abschirmungen ergänzbar ist. Diese Abdeckung besteht aus gelenkig miteinander verbundenen Abdeckelementen, die von am Werkzeugträger angebrachten waagerechten bzw. ortsfesten senkrechten Geradführungen längs- und schwenkbeweglich aufgenommen werden. Die Verbindung zwischen den Abdeckelementen wird über Scharniere verwirklicht. Der Arbeitsraum dieser Werkzeugmaschine ist somit nach allen Seiten abgeschirmt, und die einzelnen Maschinenbaugruppen sind vor Verschmutzung geschützt. Nachteilig an dieser Arbeitsraumabschirmung ist ihre material- und platzaufwändige Ausführung. Insbesondere an Werkzeugmaschinen mit stark eingeschränktem Bauraum ist diese Variante einer Schutzvorrichtung ebenso wenig anwendbar wie die weiter oben aufgezeigten Lösungen des Standes der Technik.

Die Aufgabe der Erfindung besteht darin, eine Werkzeugmaschine zu entwickeln, die bei kostengünstigem Aufbau und einer platzsparenden Anordnung von Maschinenteilen auf engstem Raum eine zuverlässige und uneingeschränkte Arbeitsweise ermöglicht.

Diese Aufgabe wird erfindungsgemäß mit den Merkmalen des 1. Patentanspruchs gelöst. Vorteilhafte Ausführungen ergeben sich aus den Unteransprüchen.

Erfindungsgemäß ist eine Schutzvorrichtung für orthogonal zueinander bewegbare Maschinenteile mit sich kreuzenden Bewegungsbahnen mit wenigstens zwei beweglichen Abdeckelementen vorgesehen, wobei durch eine zwischen den Abdeckelementen bestehende Wirkverbindung eine von dem ersten Maschinenteil auf das erste Abdeckelement übertragene Bewegung in eine orthogonal dazu verlaufende Bewegung des zweiten Abdeckelementes umlenkbar ist, wobei das erste Abdeckelement als eine in dem zweiten Abdeckelement drehbar gelagerte, kreisförmige Abdeckscheibe ausgebildet ist, die außermittig mit dem die Bewegung übertragenden Maschinenteil wirkverbunden ist.

Vorzugweise weist der Stator des in den Aussparungen der Seitenwände angeordneten, die Schwenkbewegung der Werkstück-Haltevorrichtung bewirkenden Motors im radialen Querschnitt gesehen die Form eines Kreissegmentes auf. Das Kreissegment besitzt dabei annähernd die Form eines Halbkreises, wobei der Mittelpunkt des zugehörigen, imaginären, Vollkreises mit der Schwenkachse zusammenfällt. Die Bogenführungssegmente sind entlang einem Kreisbogen des Kreissegmentes angeordnet, der einem Schwenkwinkel um die Schwenkachse von 0° bis 180° entspricht. Der Stator ist mit seinem flanschförmigen Ende an der Außenseite der Seitenwand befestigt.

Der Motor kann sowohl als Torquemotor-Segment als auch als Scheibenmotor-Segment ausgebildet sein. Dabei ist ein Sekundärteil des Motors an dem Stator und ein Primärteil an einem die Werkstück-Haltevorrichtung tragenden Rotorschlitten angeordnet. Bei einer Anordnung eines Torquemotor-Segments sind das Primärteil und das Sekundärteil mit ihrer Wirkfläche parallel zu der Schwenkachse angeordnet.
Bei einer Anordnung eines Scheibenmotor-Segments sind das Primärteil und das Sekundärteil mit ihrer Wirkfläche orthogonal zu der Schwenkachse angeordnet. Der Rotorschlitten ist dabei in den Bogenführungssegmenten gelagert.

Der Stator wird von einem flexiblen Abdeckelement, das durch eine Stahl- oder Gliederbandabdeckung gebildet wird, umschlossen. Der Hohlraum des Stators ist durch ein schwenkbar gelagertes Bedienerfenster verschließbar.

Hierbei ist der Hohlraum des Stators so bemessen, dass ein

Werkstückwechsel und/oder Werkstückträgervvechsel durch den Stator durchführbar ist.

Die Schutzvorrichtung ist so beschaffen, dass die Richtung der Bewegung des zweiten Abdeckelementes der Richtung der Bewegung des zweiten Maschinenteils entspricht. Das zweite Abdeckelement ist als viereckige Abdeckblende ausgebildet. Die Abdeckscheibe ist um eine durch ihren Mittelpunkt führende Drehachse drehbar.
Die Übertragung der Bewegung des ersten Maschinenteils auf die Abdeckscheibe kann durch eine an dem Maschinenteil angeordnete Arbeitsspindel erfolgen, welche die Abdeckscheibe außermittig und achsparallel zu der Drehachse durchdringt.
Die Bewegung des Maschinenteils auf die Abdeckscheibe kann auch durch einen mit dem Maschinenteil drehfest verbundenen Flansch übertragen werden, welcher die Abdeckscheibe außermittig und achsparallel zu der Drehachse durchdringt. Arbeitsspindel oder Flansch durchdringen die Abdeckscheibe in einem radialen Abstand von ihrer Drehachse kreisförmig.
Die Abdeckscheibe ist drehbar und abgedichtet an Arbeitsspindel oder Flansch gelagert. Dabei ist die in der Abdeckblende drehbar gelagerte Abdeckscheibe an ihrem Umfang abgedichtet. Die Abdeckscheibe kann an ihrem Umfang in der Abdeckblende gelagert sein. Dann weist die Abdeckblende eine den Abmessungen der kreisförmigen Abdeckscheibe entsprechende Aussparung auf.
Die Abdeckscheibe kann auch in ihrem die Drehachse aufnehmenden Mittelpunkt in der Abdeckblende gelagert sein. Dann weist die Abdeckblende eine der kreisbogenförmigen Bewegungsbahn von Arbeitsspindel oder Flansch mit der Abdeckscheibe entsprechende Aussparung auf.

Die Abdeckblende ist entlang von Führungsschienen verschiebbar, die orthogonal zu der Bewegungsrichtung des die Bewegung auf die Abdeckscheibe übertragenden Maschinenteils angeordnet sind.
Durch eine lineare Bewegung des ersten Maschinenteils um einen bestimmten Betrag ist eine Drehbewegung der Abdeckscheibe um ihre Drehachse um einen bestimmten Winkel hervorrufbar.

Das Maschinengestell kann dabei als ein geschlossener Hohlquader ausgebildet sein, wobei an zwei sich gegenüberliegenden Innenseiten des hohlquaderförmigen Maschinengestells je ein Führungsteil mit in y- und/oder in z-Richtung verfahrbaren Schlitten/Maschinenteilen zur beidseitigen Aufnahme eines sich in x-Richtung erstreckenden Querträgers angeordnet ist, und sich an dem Querträger ein in x-Richtung verfahrbarer, die Arbeitsspindel tragender Schlitten befindet.

An den Innenseiten des Maschinengestells sind wenigstens eine Palettenwechseleinrichtung, eine Werkzeugwechseleinrichtung mit wenigstens einem Werkzeugmagazin und ein Späneförderer befestigt. Der Späneförderer ist dabei auf der geschlossenen Bodenplatte des hohlquaderförmigen Maschinengestells angeordnet.
Ein Bedientableau ist ebenfalls am Maschinengestell angebracht.
Der in x-Richtung bewegbare Schlitten kann auch zwei Arbeitsspindeln aufnehmen, oder zwei in x-Richtung bewegbare Schlitten nehmen jeweils wenigstens eine Arbeitsspindel auf.
Das Maschinengestell bildet gleichzeitig eine Arbeitsraumverkleidung und eine Schutzeinhausung für alle maschinenspezifischen Einrichtungen.

Die Erfindung wird nachstehend an Ausführungsbeispielen näher erläutert. Es zeigen:
- Fig. 1:: eine Werkzeugmaschine mit einer Arbeitsspindel in Vorderansicht
- Fig. 2:: eine Werkzeugmaschine mit zwei Arbeitsspindeln in Vorderansicht
- Fig. 3:: eine Werkzeugmaschine mit einer Arbeitsspindel in größerer Bauweise
- Fig. 4:: eine Werkzeugmaschine mit zwei Arbeitsspindeln in Draufsicht
- Fig. 5:: eine Werkzeugmaschine in Seitenansicht
- Fig. 6:: Parallelschnitt zur Schwenkachse A von vorn
- Fig. 7:: Parallelschnitt zur Schwenkachse A von oben
- Fig. 8:: Seitenansicht, Blick von außen auf die Stirnseite der Schwenkachse A
- Fig. 9:: Querschnitt der Schwenkachse A mit Blick auf die Lagerung
- Fig. 10:: Querschnitt der Schwenkachse A mit Blick auf den Motor
- Fig. 11:: Querschnitt der Schwenkachse A in Maschinenmitte bei waagerechter Stellung des Werkstücktisches
- Fig. 12:: Querschnitt der Schwenkachse A in Maschinenmitte bei senkrechter Stellung des Werkstücktisches
- Fig. 13:: Querschnitt eines Scheibenmotor-Segments
- Fig. 14:: Seitenansicht einer erfindungsgemäßen Werkzeugmaschine mit angedeuteter Schutzvorrichtung
- Fig. 15:: Vorderansicht nach Fig. 14 bei sich in zwei unterschiedlichen Positionen befindlichen Schutzvorrichtung
- Fig. 16:: Schutzvorrichtung nach Fig. 15 in einer ersten Position
- Fig. 17:: Schutzvorrichtung nach Fig. 15 in einer zweiten Position

- Fig. 18:: entlang x-y-Koordinatenachsen verfahrbare Maschinenteile mit Arbeitsspindel ohne Schutzvorrichtung
- Fig. 19:: Schutzvorrichtung bei Arbeitsspindelposition y - unten, x - rechts
- Fig. 20:: Schutzvorrichtung bei Arbeitsspindelposition y - unten, x - Mittelstellung
- Fig. 21:: Schutzvorrichtung bei Arbeitsspindelposition y - oben, x - Mittelstellung
- Fig. 22:: Längsschnitt durch Fig. 3 in schematischer Darstellung
- Fig. 23:: Schutzvorrichtung bei flacher Bauweise und Arbeitsspindelposition y - unten, x - links

Die Werkzeugmaschine weist hier ein als Hohlquader ausgebildetes Maschinengestell 1 auf, das auf allen sechs Seiten geschlossen ist. Der Arbeitsraum mit wenigstens einem Werkstücktisch 3 befindet sich dabei ebenfalls innerhalb des Maschinengestells 1. Der Werkstücktisch 3 wird hier von einem Drehtisch, der um eine Drehtischachse B drehbar ist, gebildet.
Bei einer 5-Seitenbearbeitung befindet er sich vorzugsweise auf einer schwenkbaren, als Werkstückwippe ausgebildeten Werkstück-Haltevorrichtung 2, die an den Innenseiten der beiden sich gegenüberliegenden senkrechten Seitenwände 1.1, 1.2 des Maschinengestells 1 um eine Schwenkachse A schwenkbar gelagert ist. Dabei können auch zwei Werkstücktische 3 auf der Werkstückwippe angeordnet sein.
Ebenfalls an den sich gegenüberliegenden Innenseiten der Seitenwände 1.1, 1.2 des Maschinengestells 1 sind Führungsteile 10 befestigt. Im hier aufgezeigten Beispiel sind sie in z-Richtung angeordnet und nehmen je einen in z-Richtung verfahrbaren Schlitten 9 auf. Die Schlitten 9 weisen wiederum in y-Richtung verlaufende Führungen zur Aufnahme eines sich in x-Richtung erstreckenden und in y-Richtung verfahrbaren Querträgers 8 auf. Es ist aber auch möglich, die Führungsteile 10 in y-Richtung anzuordnen. Die Schlitten 9 sind dann in y-Richtung bewegbar und weisen in z-Richtung verlaufende Führungen auf, entlang denen der Querträger 8 verfahrbar ist. In beiden Fällen ergibt sich eine Beweglichkeit des Querträgers 8 in y- und in z-Richtung, die über beidseitig an den Enden des Querträgers 8 angeordnete Linearantriebe verwirklicht wird. An der Unterseite des Querträgers 8 ist ein in x-Richtung verfahrbarer, wenigstens eine Arbeitsspindel 6 aufnehmender Schlitten 7 angeordnet. Diese unterhalb des Querträgers 8 erfolgende Anordnung der Arbeitsspindel 6 ermöglicht einen freien Fall der Späne in Richtung der geschlossenen Bodenplatte des Maschinengestells 1. Dort befindet sich ein Späneförderer 11, der die bei der Bearbeitung anfallenden Späne aufnimmt. Durch die seitliche Anordnung der y- und z- Führungen kann ein günstiger, ungehinderter Spänefall erzielt werden. Es sind keinerlei Behinderungen durch Abdeckungen und Führungen vorhanden. Durch die geschlossene Ausführung des Maschinengestells 1 muss auch keine separate Auffangwanne für die Kühlmittelleckage vorgesehen sein. Unterstützt wird der gute Spänefall noch durch die Möglichkeit der Überkopfbearbeitung an der um einen Winkel von mindestens 180° (bis etwa 200°) um die Schwenkachse A schwenkbaren Werkstückwippe 2.
Öffnungen sind in dem als Hohlquader ausgeführten Maschinengestell 1 lediglich für die Beschickung der Werkzeugmaschine vorgesehen; z.B. für die Übergabe/Entnahme der Werkstücke und der Werkzeuge.

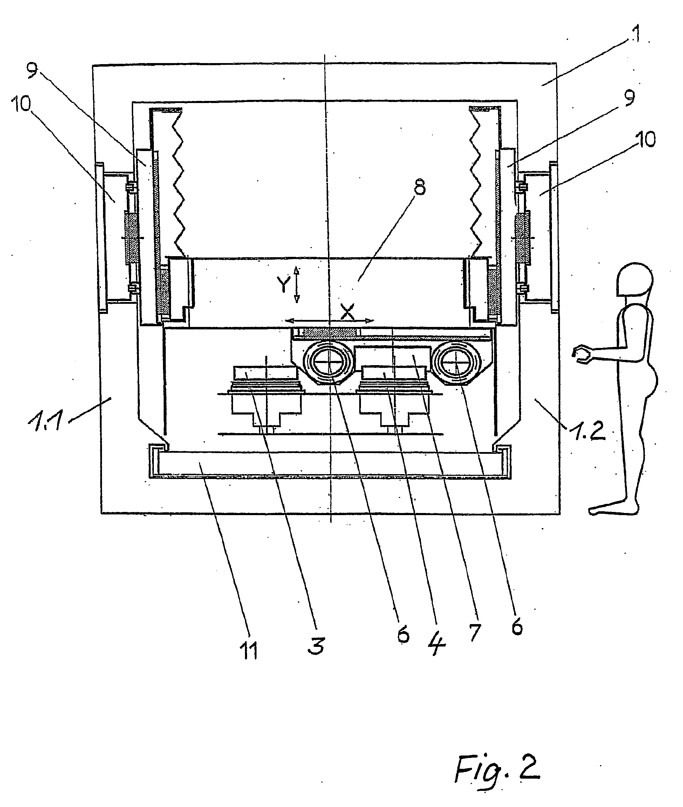

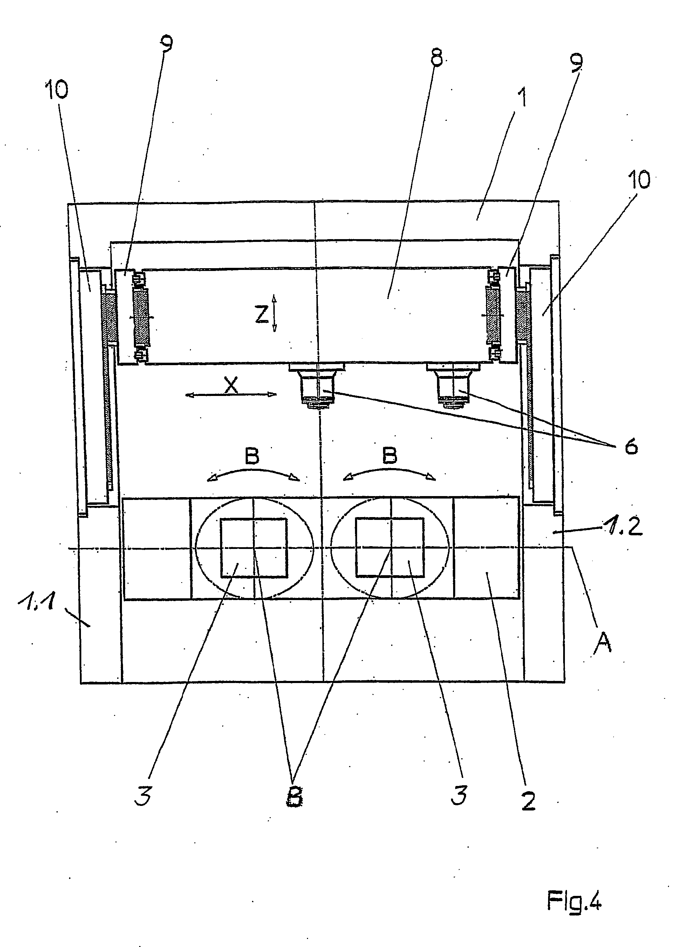

In den Fig. 2 und 4 ist eine Werkzeugmaschine mit zwei Arbeitsspindeln 6 dargestellt. Wahlweise kann der in x-Richtung verfahrbare Schlitten 7 sowohl für eine als auch für zwei Arbeitsspindeln 6 vorgesehen sein. Bei dem Einsatz von zwei Arbeitsspindeln 6 ist eine Koppelung in allen Achsen vorgesehen, so dass ein paralleles Arbeiten beider Arbeitsspindeln 6 erfolgt. Da sich der Arbeitsraum innerhalb des Maschinengestells 1 befindet, ist keine zusätzliche Arbeitsraumverkleidung erforderlich. Das Maschinengestell 1 selbst bildet die Arbeitsraumverkleidung. Aufwändige Blechkonstruktionen können somit entfallen.

Außerdem können sich innerhalb des Maschinengestells 1 alle für die geforderte Werkstücksbearbeitung notwendigen Einrichtungen befinden. So sind im hier aufgezeigten Ausführungsbeispiel an den Innenseiten des Maschinengestells 1 neben den weiter oben erwähnten Befestigungen für die Lagerstellen der Werkstückwippe und der Führungsteile 10 weitere Anschraubflächen für wenigstens eine Werkzeugwechseleinrichtung mit wenigstens einem Werkzeugmagazin sowie für wenigstens eine Palettenwechseleinrichtung vorgesehen. Ein Bedientableau ist ebenfalls am Maschinengestell 1 angeordnet.
Diese Einrichtungen sind hier nicht näher dargestellt.

Durch diesen Aufbau der Werkzeugmaschine, die ein als geschlossener Hohlquader ausgebildetes Maschinengestell 1 aufweist, ergibt sich eine sehr steife Konstruktion.
Insbesondere in Verbindung mit der über den Querträger 8 verwirklichten Gantry-Bauweise kann eine hohe Steifigkeit und eine hohe Dynamik der Werkzeugmaschine erzielt werden. Auf Grund seiner an beiden Enden erfolgenden Befestigung entsteht nur eine minimale Durchbiegung des Querträgers 8. Die Beweglichkeit des Querträgers 8 in orthogonal zueinander verlaufende Richtungen kann mittels in Kreuzschlittenbauweise an den Führungsteilen 10 angeordneten Schlitten verwirklicht werden. Führungsteile und Schlitten müssen nur Zug- und Druckkräfte übertragen. Sie zeigen dabei eine sehr schmale und leichte Bauweise und ermöglichen durch die beidseitige Aufnahme des Querträgers 8 eine auf kürzestem Wege erfolgende Einleitung der Bearbeitungskräfte und/oder der beim Beschleunigen entstehenden Massenträgheitskräfte in das Maschinengestell 1. In den Linearachsen werden zudem relativ kleine Massen bewegt, wodurch eine hohe Dynamik erzielbar ist.

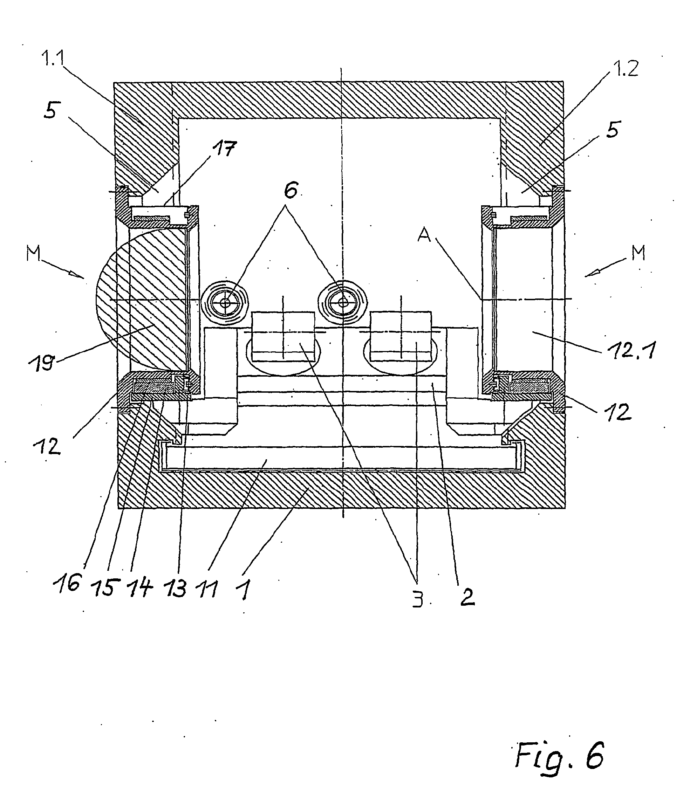

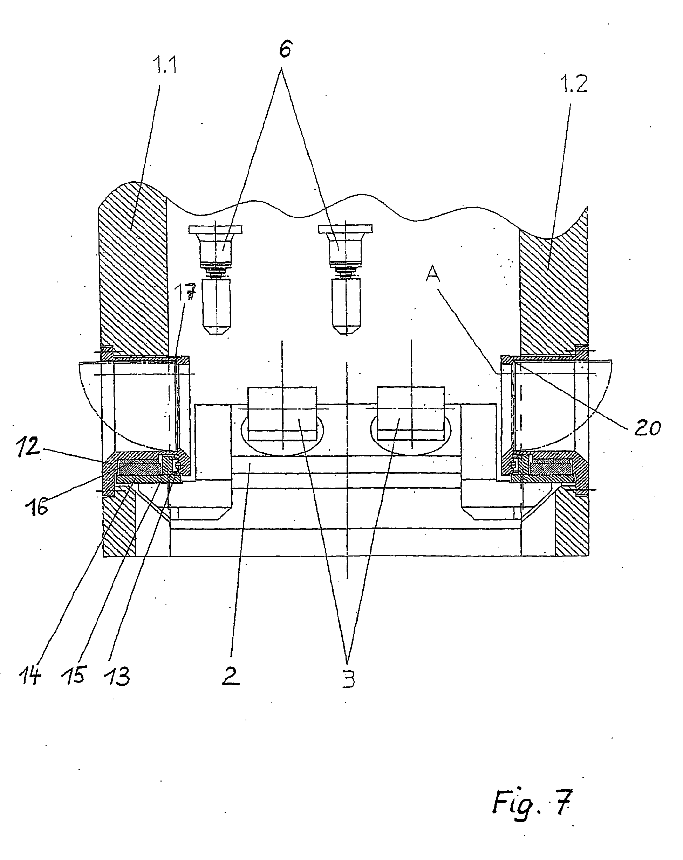

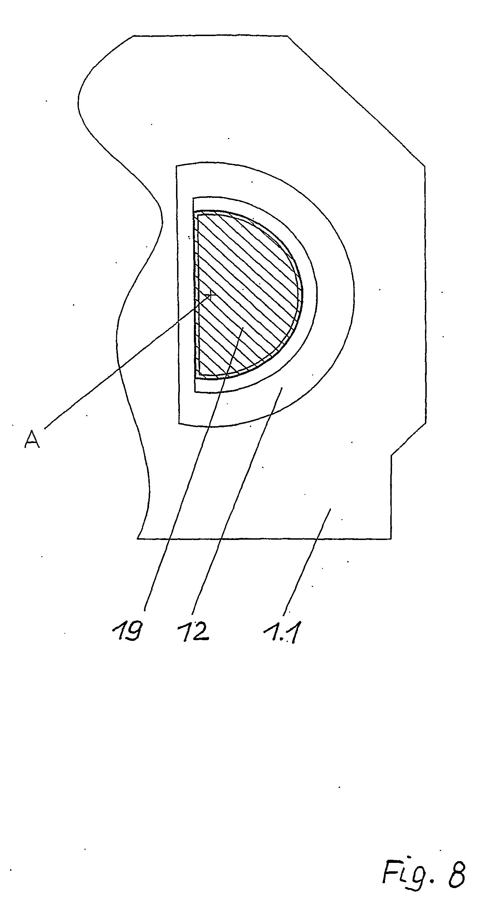

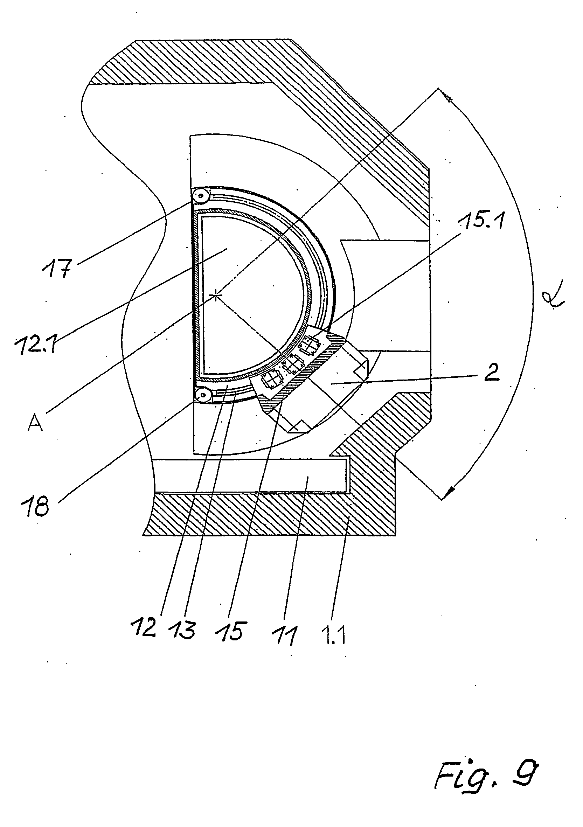

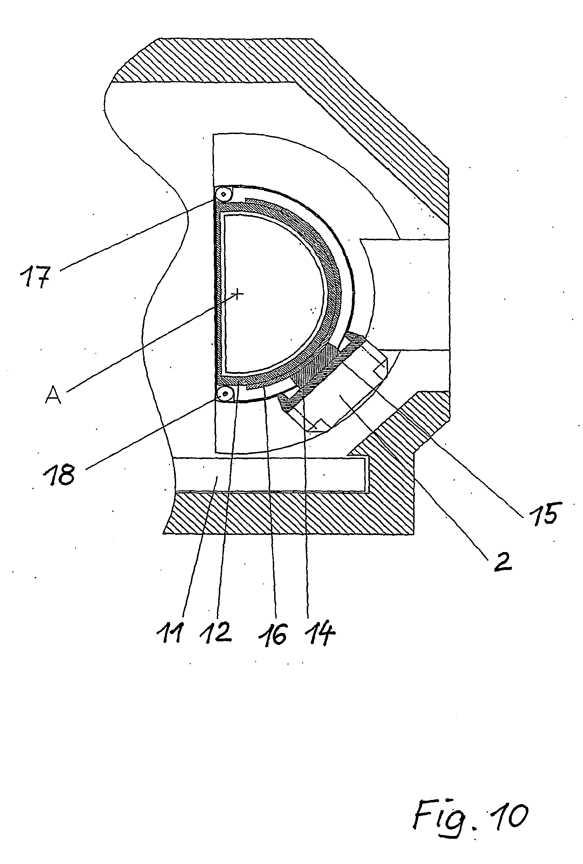

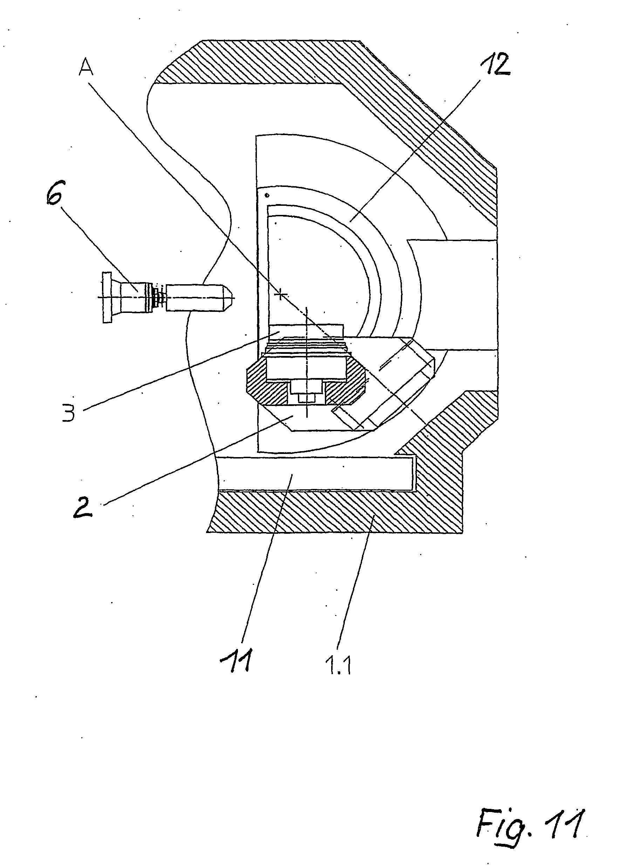

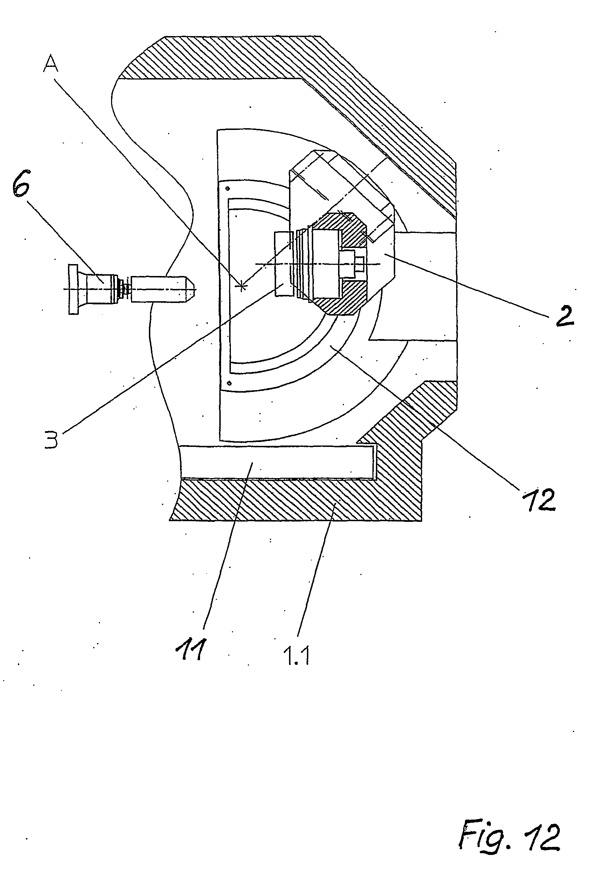

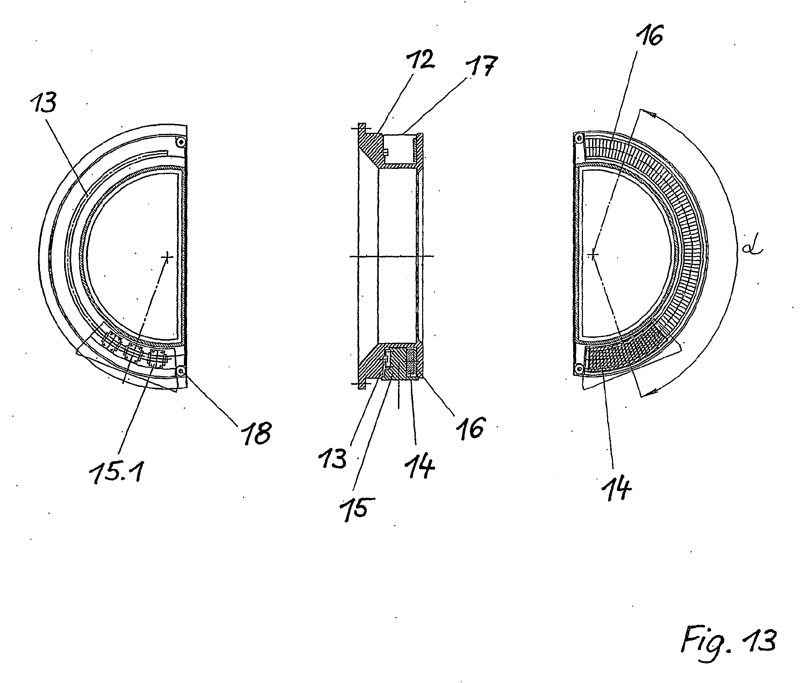

In den Fig. 6 bis 13 ist die nach allen Seiten geschlossene Ausführung der Werkzeugmaschine in der Art eines Hohlquaders, innerhalb welchem sich alle wichtigen Maschinenbaugruppen befinden, nicht näher gezeigt.
In diesem Ausführungsbeispiel weist die Werkzeugmaschine zwei Werkstücktische 3 und zwei waagerecht angeordnete Arbeitsspindeln 6 auf. Es ist aber auch eine Bestückung mit nur einem Werkstücktisch 3 und/oder einer Arbeitsspindel 6 möglich. Die Werkstücktische 3 werden dabei von der als Werkstückwippe ausgebildeten Werkstück-Haltevorrichtung 2 aufgenommen. In den Seitenwänden 1.1 und 1.2 des Maschinengestells 1 sind fluchtend angeordnete, durchgehende Öffnungen oder Aussparungen 5 zur Aufnahme eines koaxial zu der horizontalen Schwenkachse A der Werkstück-Haltevorrichtung 2 angeordneten Stators 12 vorgesehen. Der Stator 12 besitzt dabei im radialen Querschnitt gesehen die Form eines Kreissegments, annähernd eines Halbkreises. Er ist so angeordnet, dass der Mittelpunkt des zugehörigen, imaginären Vollkreises mit der Schwenkachse.A zusammenfällt. Außerdem weist er einen Hohlraum 12.1 mit einem großen Innenradius auf. Mit seinem einen, flanschförmigen, Ende ist er an der Außenseite der Seitenwand 1.1, 1.2 befestigt, beispielsweise festgeschraubt, während sein anderes Ende in den Bearbeitungsraum der Werkzeugmaschine hinein zeigt. An dem Stator 12 ist eine aus mehreren Bogenführungssegmenten 13 bestehende Bogenführung angeordnet, die der Lagerung eines ein Primärteil 14 tragenden Rotorschlittens 15 dient. Ein zugehöriges Sekundärteil 16 ist, dem Primärteil 14 gegenüberliegend, an dem Stator 12 befestigt. Der Rotorschlitten 15 ist über Führungsschuhe 15.1 in den Bogenführungssegmenten 13 gelagert. Der Rotorschlitten 15 trägt die Werkstück-Haltevorrichtung 2 mit den Werkstücktischen 3. Die Bogenführungssegmente 13 sind am Umfang des Stators 12 entlang einem Kreisbogen des Kreissegmentes angeordnet, der einem um die Schwenkachse A drehenden Schwenkwinkel α von 0° bis 180° entspricht. In diesem Fall finden drei Stück Bogenführungssegmente 13 für je 60° Anwendung. Die beschriebenen Teile können dabei zu einem Motor M gehören, der sowohl ein Torquemotor-Segment als auch ein Scheibenmotor-Segment sein kann. Bei Verwendung eines Torquemotor-Segmentes sind Primärteil 14 und Sekundärteil 16 parallel zu der Schwenkachse A, bei Verwendung eines Scheibenmotor-Segmentes orthogonal zu der Schwenkachse A angeordnet. Des Weiteren ist ein flexibles Abdeckelement 17, beispielsweise eine Stahl- oder Gliederbandabdeckung, vorgesehen, welches die Teile des Motors M vor Verunreinigungen schützt. Eine Umlenkrolle 18 dient dazu, am Stator 12 vorhandene scharfe Kanten bei der Abdeckung zu umgehen. Auf Grund des eine freie Sicht in den Bearbeitungsraum der Werkzeugmaschine gewährenden Hohlraumes 12.1 des Stators 12 ist es möglich, ein Bedienerfenster 19 am Stator 12 anzuordnen. Das Bedienerfenster 19 ist mittels eines Schwenkscharnieres 20 auf- und zuschwenkbar.

### Die Wirkungsweise ist folgende:

Bei Einschaltung des Motors M vollführt der Rotorschlitten 15 mit der auf ihm befestigten Werkstück-Haltevorrichtung 2 eine Verfahrbewegung entlang den Bogenführungssegmenten 13, die einer Schwenkbewegung um die Schwenkachse A entspricht. Die auf der Werkstück-Haltevorrichtung 2 angeordneten Werkstücktische 3 vollführen diese Schwenkbewegung, die einen Schwenkwinkel α aufweist, der zwischen 90° und 180° - vorzugsweise aber bei etwa 140° - liegt, ebenfalls aus. Dieser bevorzugte Schwenkwinkel α ist ausreichend, um eine 5-Seitenbearbeitung eines auf dem Werkstücktisch 3 aufgespannten, hier nicht gezeigten, Werkstücks durchzuführen.
Die Feststellung der Werkstück-Haltevorrichtung 2 in der gewünschten Schwenkposition erfolgt in hier ebenfalls nicht dargestellter, aber an sich bekannter Weise, mittels einer Klemmeinrichtung.
Gegenüber den bekannten Lösungen des Standes der Technik wird die Schwenkbewegung um die Schwenkachse A nicht durch eine Welle des Motors M hervorgerufen. Der Motor M besitzt keine Welle.
Es erfolgt eine Übertragung der Schwenkbewegung über den am Umfang des Stators 12 in den Bogenführungssegmenten 13 gelagerten Rotorschlitten 15. Durch die Anordnung des wellenlosen Motors M ist die Aussparung 5 der Seitenwand 1.1, 1.2 trotz der dortigen Anordnung des Antriebes offen. Die Größe des Hohlraumes 12.1 gestattet aber nicht nur in den Bearbeitungsraum hineinzuschauen, sondern ermöglicht darüber hinaus die Zuführung bzw. den Abtransport der Werkstücke durch den Stator 12. Durch den Hohlraum 12.1 des Stators 12 hindurch kann somit der Werkstückwechsel gestaltet werden.
Dieser Aspekt schafft eine vollkommen neue Möglichkeit der Verkettung der Werkzeugmaschinen im Bearbeitungsprozess.
Durch die Verwendung eines im Querschnitt annähernd halbkreisförmigen Stators 12 kann neben der Einsparung von kostenintensiven Lagerteilen ein geringer Platzbedarf aufgezeigt werden. Gerade bei Werkzeugmaschinen in der vorliegenden Hohlquader-Bauweise ist innerhalb des Bearbeitungsraumes wenig Platz vorhanden. Eine Vollkreis-Ausführung des Stators 12 würde mit an den Innenseiten der Seitenwände 1.1 und 1.2 angeordneten Maschinenteilen bzw. Abdeckungen kollidieren.

Bei der beschriebenen Werkzeugmaschine in Gantry-Bauweise, die ein hohlquaderförmig ausgebildetes Maschinengestell aufweist, ist ebenfalls wenig Platz für die Anordnung von Abdeckungen vorhanden. Insbesondere für die an den Innenseiten angeordneten Führungssysteme sind die Möglichkeiten der Anbringung eines Schutzes vor Spänen und Kühlmittel stark eingeschränkt.
Die erfindungsgemäße Schutzvorrichtung dient dabei dem Schutz von orthogonal zueinander bewegbaren Maschinenteilen mit sich kreuzenden Bewegungsbahnen, wie sie beispielsweise an den Führungsteilen 10 der Seitenwände 1.1, 1.2 der Werkzeugmaschine angeordnet sind. Sie ist aber auch an anderen Werkzeugmaschinen einsetzbar - überall dort, wo wenigstens ein Maschinenteil orthogonal zu einem anderen Maschinenteil bei sich kreuzenden Bewegungsbahnen verfahrbar ist.

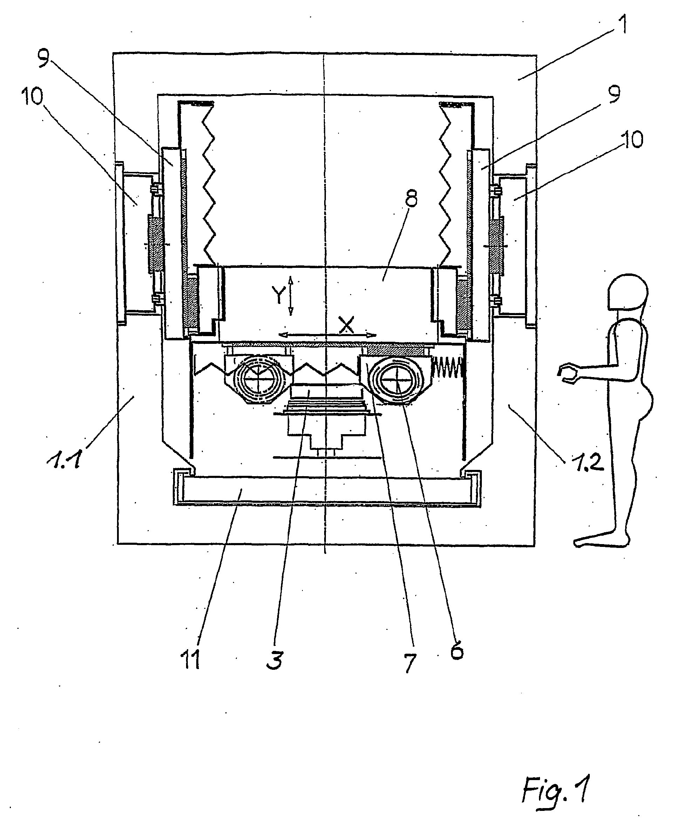

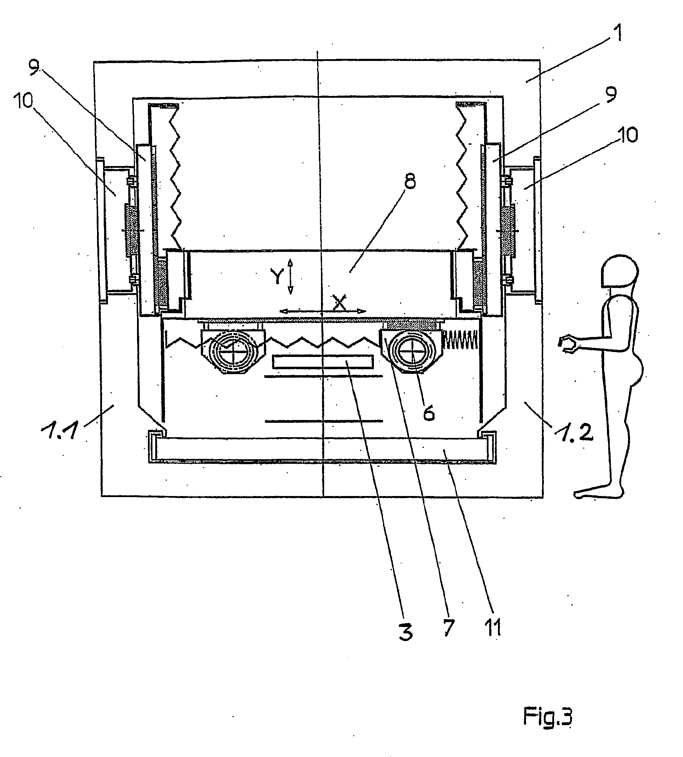

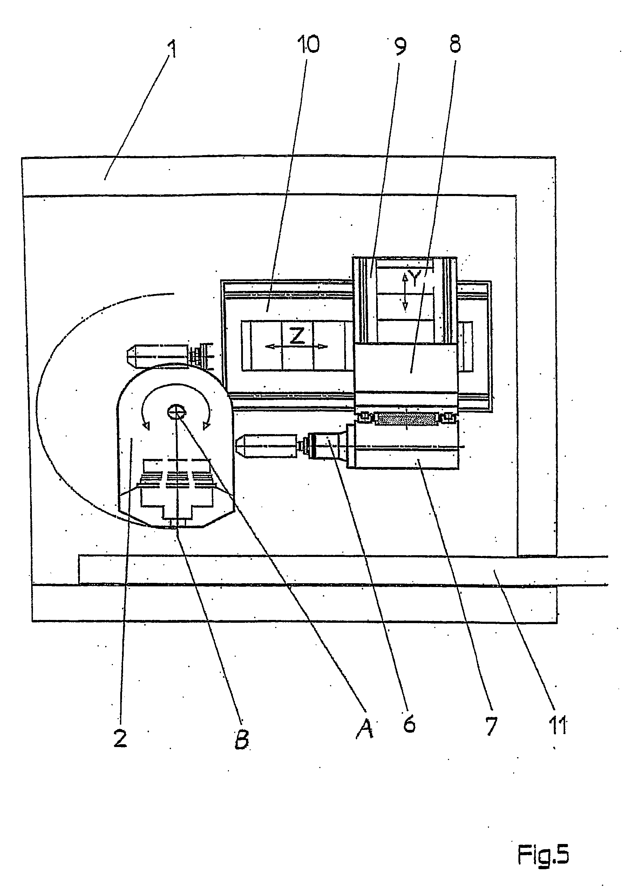

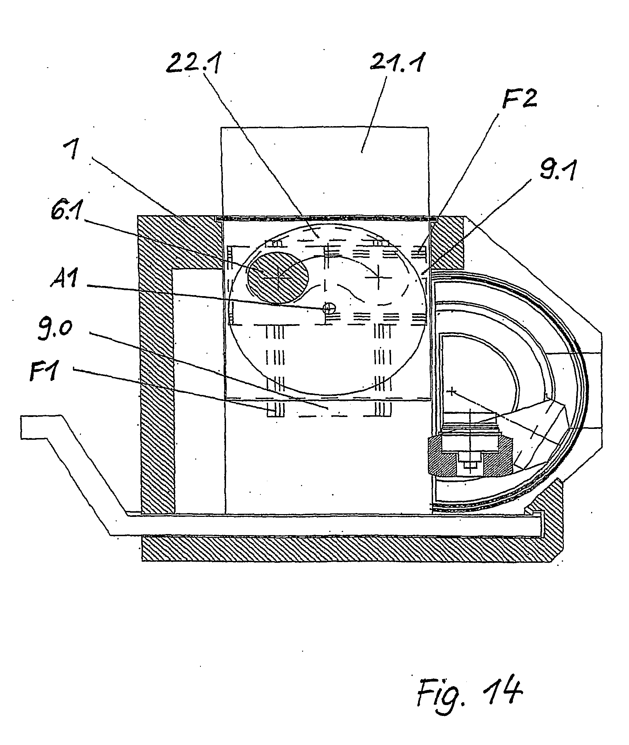

In dem Ausführungsbeispiel nach Fig. 14 bis 17 ist die Anordnung der erfindungsgemäßen Schutzvorrichtung an der hohlquaderförmig ausgebildeten Werkzeugmaschine schematisch dargestellt.
Dabei sind an den Seitenwänden 1.1, 1.2 in den dort befindlichen, nur angedeuteten, Führungsteilen 10 in Kreuzschlittenbauweise je ein erstes Maschinenteil 9.1 und ein zweites Maschinenteil 9.0 geführt. Im Folgenden wird das erste Maschinenteil 9.1 als Querschlitten 9.1 und das zweite Maschinenteil 9.0 als Längsschlitten 9.0 bezeichnet. (Im weiter oben beschriebenen Ausführungsbeispiel und auf den Zeichnungen Fig. 1 bis Fig. 5 entspricht diese Anordnung den Führungsteilen 10 mit Schlitten 9). Der Längsschlitten 9.0 ist entlang der Führungsbahnen F1 des Führungsteiles 10 in Richtung y (y-Koordinatenachse) verfahrbar. Auf dem Längsschlitten 9.0 ist der Querschlitten 9.1 entlang der Führungsbahnen F2 des Längsschlittens 9.0 in Richtung z (z-Koordinatenachse) verfahrbar. An dem Querschlitten 9.1 ist drehfest ein Flansch 6.1 angebracht, der als Verbindungsstück zu dem in

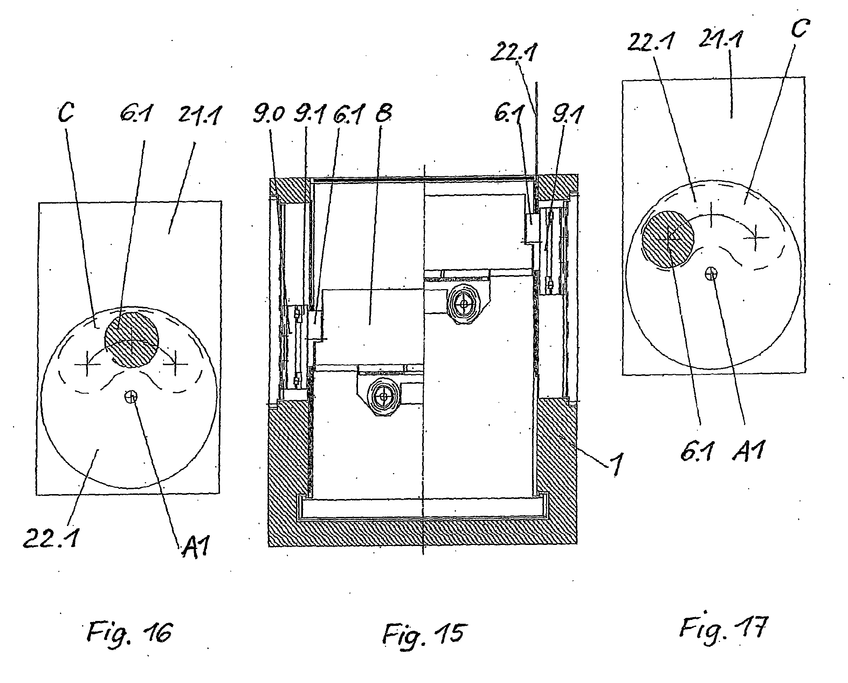

Fig. 14 nicht dargestellten und in Fig. 15 angedeuteten Querträger 8 dient. Dieser in Richtung x (x-Koordinatenachse) angeordnete Querträger 8 ist mit seinen beiden Enden an den Flanschen 6.1 der an den sich gegenüberliegenden Seitenwänden 1.1, 1.2 des Maschinengestells 1 befindlichen Querschlitten 9.1 befestigt. In der in Fig. 15 dargestellten Vorderansicht der Werkzeugmaschine ist der Querträger 8 in zwei unterschiedlichen Positionen gezeigt:
Während auf der vom Betrachter aus gesehen linken Seite sich der Querträger 8 und damit der Flansch 6.1 in der unteren y-Stellung befindet, ist auf der rechten Seite der Flansch 6.1 mit dem Querträger 8 in der, in Richtung y gesehen, oberen Stellung.
Die zugehörigen Fig. 16 und 17 zeigen schematisch die erfindungsgemäße Schutzvorrichtung gemäß der in Fig. 15 gezeigten Darstellung.
Die Schutzvorrichtung besteht aus einem als viereckige Abdeckblende 21.1 ausgeführten Abdeckelement 21, welches in Richtung y parallel zu den Führungsbahnen F1 des Längsschlittens 9.0 in hier nicht näher gezeigten Führungsschienen S verfahrbar angeordnet ist. Die Abdeckblende 21.1 wird von einem weiteren, als kreisförmige Abdeckscheibe 22.1 ausgebildeten Abdeckelement 22 durchdrungen. Die Abdeckscheibe 22.1 ist um eine durch ihren Mittelpunkt führende Drehachse A1 drehbar gelagert. An dem Umfang der Abdeckscheibe 22.1, entlang der kreisförmigen Berührungslinie zwischen ihr und der Abdeckblende 21.1, ist eine Abdichtung vorgesehen. Die Abdeckscheibe 22.1 wird außermittig in einem radialen Abstand b sowie achsparallel zu ihrer Drehachse A1 von dem Flansch 6.1 durchdrungen, an dem sie drehbar gelagert ist. Die Durchdringungen sowohl von Abdeckscheibe 22.1/Abdeckblende 21.1 und Flansch 6.1/Abdeckscheibe 22.1 sind dabei kreisförmig und abgedichtet. Bei Bewegung des Querschlittens 9.1 und damit des an ihm befestigten Flansches 6.1 in Richtung z wird die drehbeweglich und außermittig mit dem Flansch 6.1 verbundene Abdeckscheibe 22.1 um ihre Drehachse A1 gedreht. In Abhängigkeit von der zurückgelegten Strecke in Richtung z erfolgt eine Drehbewegung um die Drehachse A1 um einen Winkel β. Die Drehbewegung der Abdeckscheibe 22.1 wird wiederum auf die Abdeckblende 21.1 übertragen, die dadurch eine lineare Bewegung in Richtung y ausführt. Bei einer Mittelstellung des Flansches 6.1, dass heißt, bei Zurücklegen eines Weges z/2 in Richtung z führt die Abdeckblende 21.1 eine Bewegung in Richtung y um einen Betrag y' durch. Bei der weiteren Bewegung des Flansches 6.1 in Richtung z bewegt sich die Abdeckblende 21.1 wieder in die Ausgangsstellung zurück - der Betrag y' geht gegen 0. Eine zusätzliche Bewegung der Schutzvorrichtung in Richtung z ist nicht erfolgt.

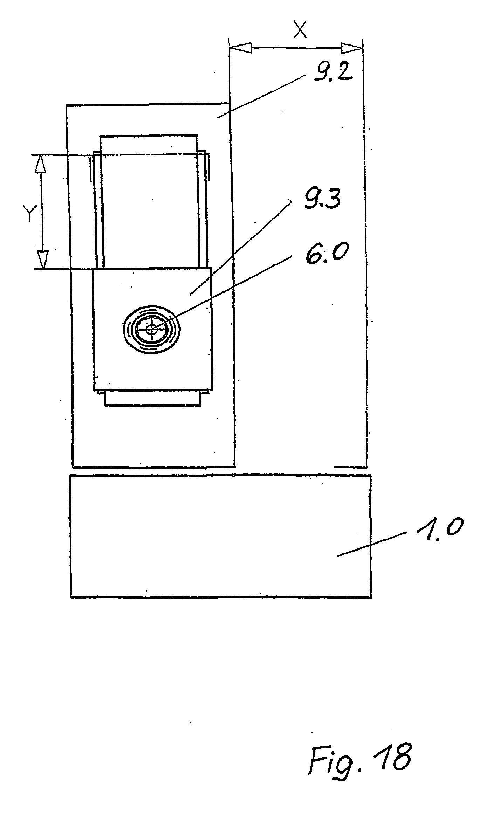

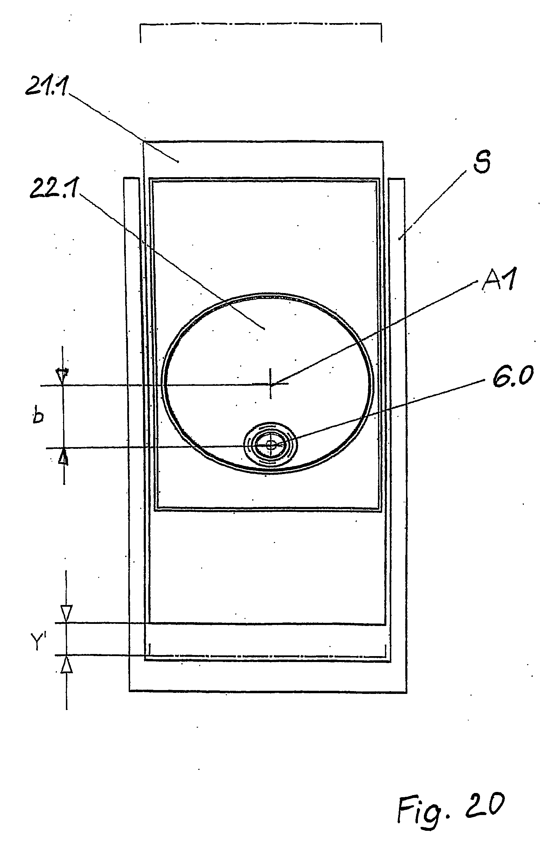

Zur näheren Erläuterung ist ein weiteres Ausführungsbeispiel für den Einsatz der erfindungsgemäßen Schutzvorrichtung in den Fig. 18 bis 23 dargestellt.
An dieser Stelle sei betont, dass die erfindungsgemäße Schutzvorrichtung überall dort einsetzbar ist, wo orthogonal zueinander verfahrbare Maschinenteile mit sich kreuzenden Bewegungsbahnen eine Schutzabdeckung erfahren sollen.
Bei der hier gezeigten Werkzeugmaschine bestand das Problem darin, dass in horizontaler Richtung (x-Koordinatenachse) nur ein geringer Bauraum Bx und in vertikaler Richtung (y-Koordinatenachse) ein ausreichender Bauraum By zur Verfügung stand. Für diese Anordnung musste ein optimaler Schutz der Maschinenteile und dort befindlicher Einrichtungen, wie Messsysteme u.ä., erreicht werden.
In Fig. 18 ist die entsprechende Maschinenbaugruppe der Werkzeugmaschine noch ohne die Schutzvorrichtung dargestellt.
Auf einem feststehenden Maschinenbett 1.0 ist ein Ständer 9.2 auf hier nicht gezeigten Führungsbahnen in horizontaler Richtung x - entlang der x-Koordinatenachse - verschiebbar angeordnet. An dem Ständer 9.2 wiederum ist ein Support 9.3 in vertikaler Richtung y - entlang der y-Koordinatenachse - verfahrbar angebracht. Von dem Support 9.3 wird eine Arbeitsspindel 6.0 aufgenommen, die sich in Fig. 18 in Richtung y in der untersten und in Richtung x in der äußersten linken Position befindet.

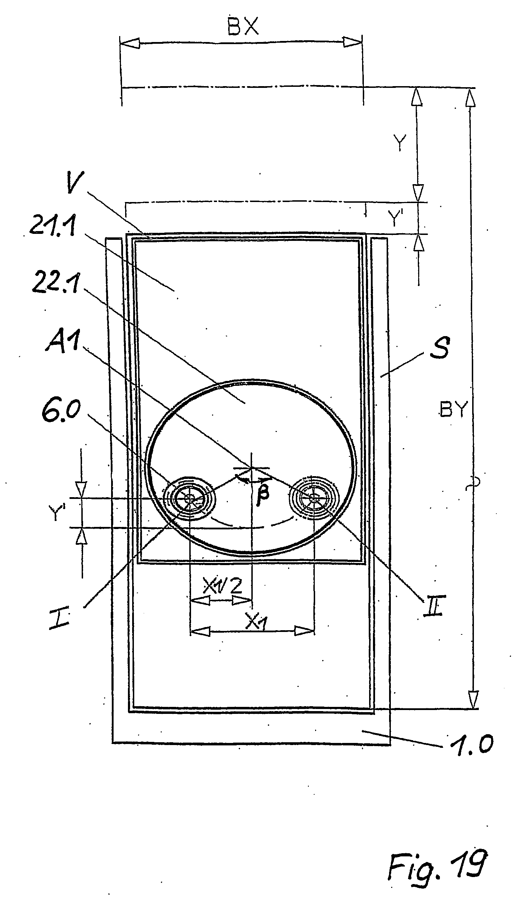

In Fig. 19 ist die sich in der Position 1 befindende Arbeitsspindel 6.0 (y ganz unten und x ganz links) dargestellt. Es ist eine weitere Position II der Arbeitsspindel 6.0 angedeutet, in welcher sich die Arbeitsspindel 6.0 nach Zurücklegen einer Strecke x1, die einer Drehung der Abdeckscheibe 22.1 um ihre mittige Drehachse A1 um einen Winkel β entspricht, befindet. Durch die zwischen der Abdeckblende 21.1 und der Abdeckscheibe 22.1 bestehende Wirkverbindung, dass eine Drehung der Abdeckscheibe 22.1 um ihre Drehachse A1 eine lineare Bewegung der Abdeckblende 21.1 in y-Richtung bewirkt, ergibt sich folgende Wirkungsweise der erfindungsgemäßen Schutzvorrichtung nach Fig. 19:
Bei Bewegung des Ständers 9.2 in Richtung x absolviert auch die Arbeitsspindel 6.0 eine Bewegung in diese Richtung. Auf Grund der außermittigen, drehbeweglichen Verbindung der Abdeckscheibe 22.1 mit der Arbeitsspindel 6.0 erfolgt bei einer geradlinigen Bewegung der Arbeitsspindel 6.0 in Richtung x eine Verdrehung der Abdeckscheibe 22.1 um ihre Drehachse A1. In Abhängigkeit von der in Richtung x zurückgelegten Strecke der Arbeitsspindel 6.0 dreht sich die Abdeckscheibe 21.1 um einen bestimmten Winkel β. Dies bewirkt wiederum eine Verschiebung der mit der Abdeckscheibe 22.1 drehbeweglich verbundenen Abdeckblende 21.1 entlang der Führungsschienen S in der orthogonal zu der Verfahrrichtung des Ständers 9.2 verlaufenden Richtung y.
Der Verfahrweg der Arbeitsspindel 6.0 mit der Abdeckscheibe 22.1 ist als Kreisbogen in Fig. 19 angedeutet. Bei Zurücklegen eines Weges x/2 in eine Mittelstellung der Arbeitsspindel 6.0, die einer Drehbewegung der Abdeckscheibe 22.1 um einen Winkel β/2 entspricht, führt die Abdeckblende 21.1 eine lineare Bewegung entlang der Führungsschienen S um den Betrag y' nach oben durch.
Die sich in Richtung x in der Mittelstellung (y ganz unten) befindende Arbeitsspindel 6.0 ist in Fig. 20 gezeigt.
Eine weitere Verschiebung der Arbeitsspindel 6.0 in Richtung x in ihre äußerste rechte Position II bewirkt eine Bewegung der Abdeckblende 21.1 um den Betrag y' nach unten, zurück in die Ausgangsstellung.

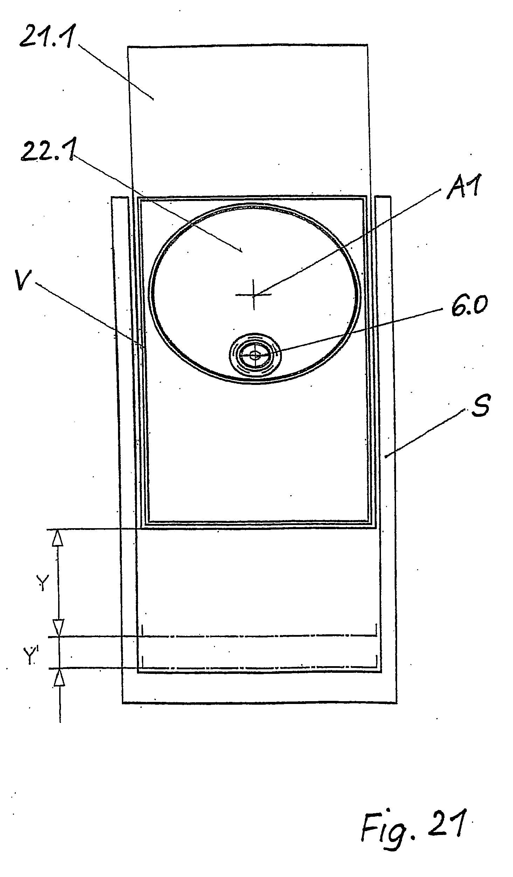

Fig. 21 zeigt die Arbeitsspindel 6.0 in Richtung x in ihrer Mittelstellung und in Richtung y in ihrer obersten Stellung.

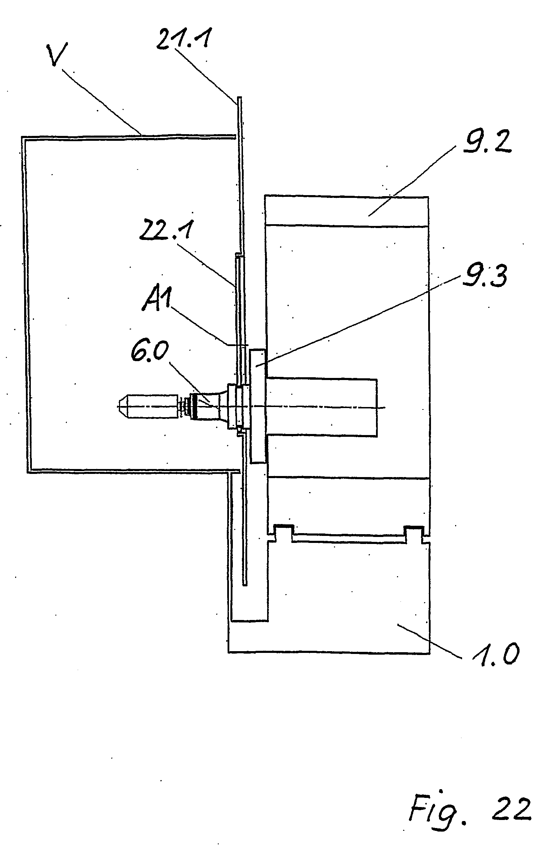

In Fig. 22 ist schematisch ein Längsschnitt nach Fig. 20 dargestellt.

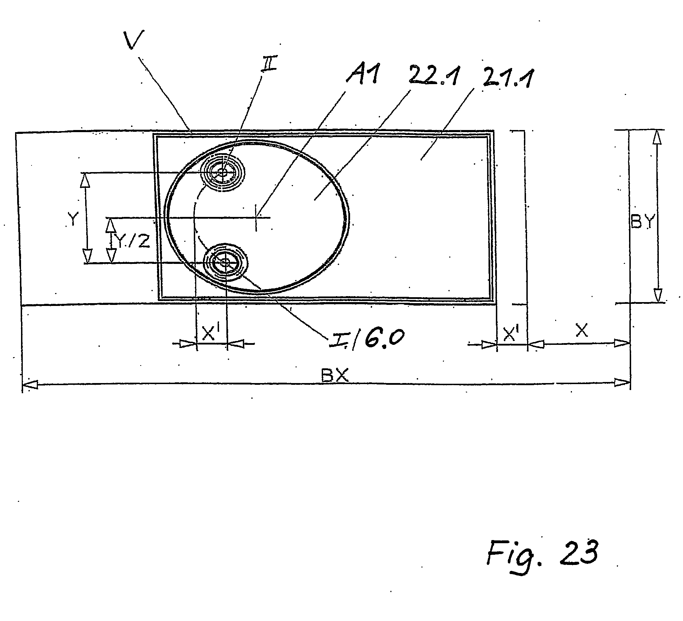

Das beschriebene Ausführungsbeispiel zeigt die Anwendung der erfindungsgemäßen Schutzvorrichtung an einer Werkzeugmaschine, die eine sehr schmale Bauweise in x-Richtung erfordert. Ein entsprechend großer Bauraum By in Richtung y ist dagegen vorhanden. Dieser kann die "umgewandelte" Bewegung (aus Richtung x in Richtung y) der Schutzvorrichtung aufnehmen.
Die gleiche Schutzvorrichtung ist aber auch einsetzbar bei einer geforderten flachen Bauweise in Richtung y (Fig. 23).
Hier ist ein stark eingeschränkter Bauraum By vorhanden, während in Richtung x der Bauraum Bx großzügiger bemessen ist. Der Aufbau und die Anordnung der erfindungsgemäßen Schutzvorrichtung sind analog der weiter oben beschriebenen, nur um 90° gedreht dargestellt. Die Arbeitsspindel 6.0 verfährt hier in Richtung y aus der Position I in die Position II. Die Abdeckblende 21.1 ist dabei in Richtung x entlang der entsprechend angeordneten Führungsschienen S um einen Betrag x' bewegbar, und in der Mittelstellung der Arbeitsspindel 6.0, bei einer zurückgelegten Strecke y/2, hat die Abdeckblende 21.1 einen Weg x' zurückgelegt - in Richtung eines ausreichend großen Bauraums Bx.

Die erfindungsgemäße Schutzvorrichtung ermöglicht somit eine Abdeckung der Führungsbahnen sowie maschineninterner Einrichtungen auf engstem Raume. Dabei sind verschiedene Ausführungen und Anordnungen der beiden Abdeckelemente, Abdeckblende 21.1 und Abdeckscheibe 22.1, möglich.
So kann die Abdeckscheibe 22.1 mit ihrer Drehachse A1 in der Abdeckblende 21.1 drehbar gelagert sein. Bei dieser Ausführung ist eine kreisbogenförmige Aussparung C in die Abdeckblende 21.1 eingebracht, die den Abmessungen und dem mit der Abdeckscheibe 22.1 zurücklegbaren Weg der Arbeitsspindel 6.0 entspricht. Eine andere Ausführung sieht eine drehbewegliche Lagerung der Abdeckscheibe 22.1 an ihrem Umfang in der Abdeckblende 21.1 vor. In diesem Fall weist die Abdeckblende 21.1 eine kreisförmige, den Abmessungen der Abdeckscheibe 22.1 entsprechende, Aussparung auf. Eine Abdichtung erfolgt bei beiden Varianten jeweils an der kreisförmigen Berührungslinie von Abdeckscheibe 22.1 und Abdeckblende 21.1. In dem Vorhandensein radialer Abdichtungen, die im Gegensatz zu in geradlinigen Bereichen angeordneten Abdichtungen wirkungsvoller und zuverlässiger sind, liegt ebenfalls ein Vorzug der erfindungsgemäßen Schutzvorrichtung.
Ein weiterer Vorteil der Schutzvorrichtung ist - neben ihrem geringen Platzbedarf und dem zuverlässigen Schutz vor Spänen und anderen Verunreinigungen - ihr großes Einsatzgebiet. Überall dort, wo eine Umlenkung einer linearen Bewegung in eine dazu orthogonal verlaufende Bewegung gefordert wird, ist sie einsetzbar. Möglich ist ihre Anwendung auch bei nur einem bewegbaren Maschinenteil, während das andere Maschinenteil feststehend angeordnet ist. Die Ausführung der Schutzvorrichtung ist dabei die gleiche. Allerdings entspricht die absolute Bewegung der Abdeckblende 21.1 nur dem Betrag y', wenn das entsprechende Maschinenteil in Richtung y keine Bewegung ausführt.

Somit wurde eine Werkzeugmaschine geschaffen, die bei hoher Steifigkeit und Dynamik eine vollkommen neue Möglichkeit der Verkettung von Werkzeugmaschinen im Bearbeitungsprozess schafft und dabei auf engstem Raum einen sicheren Schutz der Führungsbahnen und maschineninternen Einrichtungen gewährleistet.

## Patentansprüche

1. Werkzeugmaschine mit wenigstens einer Arbeitsspindel zur Aufnahme von Werkzeugen für die Bearbeitung von in einem Arbeitsraum befindlichen Werkstücken, mit einem Maschinengestell (1), in/an dem in x-₁ y- und/oder z-Richtung verfahrbare, diese Bewegung an die Arbeitsspindel (6) übertragende Schlitten/Maschinenteile angeordnet sind, wobei eine Schutzvorrichtung für bewegliche Maschinenteile (9, 9.0, 9.1) vorhanden ist, **dadurch gekennzeichnet,**
**dass** die für orthogonal zueinander bewegbare Maschinenteile (9.0, 9.1) mit sich kreuzenden Bewegungsbahnen vorgesehene Schutzvorrichtung wenigstens zwei bewegliche Abdeckelemente (22, 21) aufweist, und durch eine zwischen den Abdeckelementen (22, 21) bestehende Wirkverbindung eine von dem ersten Maschinenteil (9.1) auf das erste Abdeckelement (22) übertragene Bewegung in eine orthogonal dazu verlaufende Bewegung des zweiten Abdeckelementes (21) umlenkbar ist, wobei das erste Abdeckelement (22) als eine in dem zweiten Abdeckelement (21) drehbar gelagerte, kreisförmige Abdeckscheibe (21.1) ausgebildet ist, die außermittig mit dem die Bewegung übertragenden Maschinenteil (9.1) wirkverbunden ist.

2. Werkzeugmaschine nach Anspruch 1, **dadurch gekennzeichnet, dass** die Richtung der Bewegung des zweiten Abdeckelementes (21) der Schutzvorrichtung der Richtung der Bewegung des zweiten Maschinenteils (9.0) entspricht.

3. Werkzeugmaschine nach Anspruch 1 oder 2, **dadurch gekennzeichnet, dass** das zweite Abdeckelement (21) als viereckige Abdeckblende (21.1) ausgebildet ist.

4. Werkzeugmaschine nach einem der Ansprüche 1 bis 3, **dadurch gekennzeichnet, dass** die Abdeckscheibe (22.1) um eine durch ihren Mittelpunktführende Drehachse (A1) drehbar ist.

5. Werkzeugmaschine nach einem der Ansprüche 1 bis 4, **dadurch gekennzeichnet, dass** die Bewegung des Maschinenteils (9.1) auf die Abdeckscheibe (22.1) durch einen drehfest mit dem Maschinenteil (9.1) verbundenen Flansch (6.1) übertragbar ist, welcher die Abdeckscheibe (22.1) außermittig und achsparallel zu der Drehachse (A1) durchdringt.

6. Werkzeugmaschine nach Anspruch 5, **dadurch gekennzeichnet, dass** der Flansch (6.1) die Abdeckscheibe (22.1) in einem radialen Abstand (b) von ihrer Drehachse (A1) kreisförmig durchdringt.

7. Werkzeugmaschine nach Anspruch 5 oder 6, **dadurch gekennzeichnet, dass** die Abdeckscheibe (22.1) drehbar und abgedichtet an dem Flansch (6.1) gelagert ist.

8. Werkzeugmaschine nach einem der Ansprüche 4 bis 7, **dadurch gekennzeichnet, dass** die Abdeckscheibe (22.1) an ihrem Umfang in der Abdeckblende (21.1) gelagert ist, wobei die Abdeckblende (21.1) eine den Abmessungen der kreisförmigen Abdeckscheibe (22.1) entsprechende Aussparung aufweist.

9. Werkzeugmaschine nach einem der Ansprüche 4 bis 8, **dadurch gekennzeichnet, dass** die Abdeckscheibe (22.1) in ihrem die Drehachse (A1) aufnehmenden Mittelpunkt in der Abdeckblende (21.1) gelagert ist.

10. Werkzeugmaschine nach Anspruch 9, **dadurch gekennzeichnet, dass** die Abdeckblende (21.1) eine der kreisbogenförmigen Bewegungsbahn des Flansches (6.1) mit der Abdeckscheibe (22.1) entsprechende Aussparung (B) aufweist.

11. Werkzeugmaschine nach einem der Ansprüche 1 bis 10 , **dadurch gekennzeichnet, dass** die Abdeckblende (21.1) entlang von Führungsschienen (S) verschiebbar ist, die orthogonal zu der Richtung der von dem Maschinenteil (9.1) auf die Abdeckscheibe (22.1) wirkenden Bewegung angeordnet sind.

12. Werkzeugmaschine nach einem der Ansprüche 1 bis 11, **dadurch gekennzeichnet, dass** durch eine lineare Bewegung des Maschinenteils (9.1) um einen bestimmten Betrag (x1, z1) eine Drehbewegung der Abdeckscheibe (22.1) um ihre Drehachse (A1) um einen bestimmten Winkel (β) hervorrufbar ist.

13. Werkzeugmaschine nach einem der Ansprüche 1 bis 12, **dadurch gekennzeichnet, dass** die Schutzeinrichtung überall dort einsetzbar ist, wo orthogonal zueinander bewegbare Maschinenteile (9.0, 9.1) oder (9.2, 9.3) mit sich kreuzenden Bewegungsbahnen angeordnet sind.

14. Werkzeugmaschine nach Anspruch 13, **dadurch gekennzeichnet, dass** die Bewegung des Maschinenteils (9.3) auf die Abdeckscheibe (22.1) durch eine drehfest mit dem Maschinenteil (9.3) verbundene Arbeitsspindel (6.0) übertragbar ist, welche die Abdeckscheibe (22.1) außermittig und achsparallel zu der Drehachse (A1) durchdringt.

15. Werkzeugmaschine nach einem der Ansprüche 1 bis 14, **dadurch gekennzeichnet, dass** eine zwischen den Seitenwänden (1.1, 1.2) um eine horizontale Schwenkachse (A) schwenkbar gelagerte Werkstück-Haltevorrichtung (2) vorgesehen ist, wobei in den Seitenwänden (1.1, 1.2) fluchtend angeordnete Aussparungen (5) zur Aufnahme eines eine Schwenkbewegung der Werkstück-Haltevorrichtung (2) um die Schwenkachse (A) bewirkenden Motors (M) vorgesehen sind, und der Motor (M) einen koaxial zu der Schwenkachse (A) angeordneten und mit einem Hohlraum (12.1) versehenen Stator (12) aufweist, an dessen Außenumfang Bogenführungssegmente (13) angeordnet sind, welche der Lagerung eines die Werkstück-Haltevorrichtung (2) tragenden Rotorschlittens (15) dienen.

16. Werkzeugmaschine nach Anspruch 15, **dadurch gekennzeichnet, dass** der Stator (12) des in den Aussparungen (5) der Seitenwände (1.1, 1.2) angeordneten Motors (M) im radialen Querschnitt gesehen die Form eines Kreissegmentes aufweist.

17. Werkzeugmaschine nach Anspruch 16, **dadurch gekennzeichnet, dass** das Kreissegment annähernd die Form eines Halbkreises besitzt, wobei der Mittelpunkt des zugehörigen, imaginären, Vollkreises mit der Schwenkachse (A) zusammenfällt.

18. Werkzeugmaschine nach Anspruch 16 oder 17, **dadurch gekennzeichnet, dass** die Bogenführungssegmente (13) entlang einem Kreisbogen des Kreissegmentes angeordnet sind, der einem Schwenkwinkel (α) um die Schwenkachse (A) von 0° bis 180° entspricht.

19. Werkzeugmaschine nach einem der Ansprüche 15 bis 18, **dadurch gekennzeichnet, dass** der Stator (12) mit seinem flanschförmigen Ende an der Außenseite der Seitenwand (1.1,1.2) befestigt ist.

20. Werkzeugmaschine nach einem der Ansprüche 15 bis 19, **dadurch gekennzeichnet, dass** der Motor (M) als Torquemotor-Segment ausgebildet ist.

21. Werkzeugmaschine nach einem der Ansprüche 15 bis 19, **dadurch gekennzeichnet, dass** der Motor (M) als Scheibenmotor-Segment ausgebildet ist.

22. Werkzeugmaschine nach einem der Ansprüche 15 bis 21, **dadurch gekennzeichnet, dass** ein Sekundärteil (16) des Motors (M) an dem Stator (12) und ein Primärteil (14) an dem die Werkstück-Haltevorrichtung (2) tragenden Rotorschlitten (15) angeordnet ist.

23. Werkzeugmaschine nach Anspruch 22, **dadurch gekennzeichnet, dass** das Primärteil (14) und das Sekundärteil (16) mit ihrer Wirkfläche parallel zu der Schwenkachse (A) angeordnet sind.

24. Werkzeugmaschine nach Anspruch 22, **dadurch gekennzeichnet, dass** das Primärteil (14) und das Sekundärteil (16) mit ihrer Wirkfläche orthogonal zu der Schwenkachse (A) angeordnet sind.

25. Werkzeugmaschine nach einem der Ansprüche 15 bis 24 , **dadurch gekennzeichnet, dass** der mittels Führungsschuhen (15.1) in den Bogenführungssegmenten (13) bewegbare Rotorschlitten (15) um die Schwenkachse (A) schwenkbar gelagert ist.

26. Werkzeugmaschine nach einem der Ansprüche 15 bis 25, **dadurch gekennzeichnet, dass** die Bewegung des Rotorschlittens (15) entlang der Bogenführungssegmente (13) für einen Schwenkwinkel (α) >90° und <180° vorgesehen ist.

27. Werkzeugmaschine nach einem der Ansprüche 15 bis 26, **dadurch gekennzeichnet, dass** der Stator (12) von einem flexiblen Abdeckelement (17) umschlossen wird.

28. Werkzeugmaschine nach Anspruch 27, **dadurch gekennzeichnet, dass** das flexible Abdeckelement (17) durch eine Stahl- oder Gliederbandabdeckung gebildet wird.

29. Werkzeugmaschine nach einem der Ansprüche 15 bis 28, **dadurch gekennzeichnet, dass** der Hohlraum (12.1) des Stators (12) durch ein schwenkbar gelagertes Bedienerfenster (19) verschließbar ist.

30. Werkzeugmaschine nach einem der Ansprüche 15 bis 29, **dadurch gekennzeichnet, dass** der Hohlraum (12.1) des Stators (12) so bemessen ist, dass ein Werkstückwechsel und/oder Werkstückträgerwechsel durch den Stator (12) durchführbar ist.

31. Werkzeugmaschine nach einem der Ansprüche 1 bis 30, **dadurch gekennzeichnet, dass** das Maschinengestell (1) als ein geschlossener Hohlquader ausgebildet ist, und an zwei sich gegenüberliegenden Innenseiten des hohlquaderförmigen Maschinengestells (1) je ein Führungsteil (10) mit in y- und/oder in z-Richtung verfahrbaren Schlitten/Maschinenteilen (9 / 9.0, 9.1) zur beidseitigen Aufnahme eines sich in x-Richtung erstreckenden Querträgers (8) angeordnet ist, wobei sich an dem Querträger (8) ein in x-Richtung verfahrbarer, die Arbeitsspindel (6) tragender Schlitten (7) befindet.

32. Werkzeugmaschine nach einem der Ansprüche 1 bis 31, **dadurch gekennzeichnet, dass** sich der Arbeitsraum innerhalb des Maschinengestells (1) befindet und das Maschinengestell (1) gleichzeitig eine Arbeitsraumverkleidung und/oder eine Schutzeinhausung für alle maschinenspezifischen Einrichtungen bildet.

33. Werkzeugmaschine nach einem der Ansprüche 1 bis 32, **dadurch gekennzeichnet, dass** an den Innenseiten des Maschinengestells (1) wenigstens eine Palettenwechseleinrichtung befestigt ist.

34. Werkzeugmaschine nach einem der Ansprüche 1 bis 33, **dadurch gekennzeichnet, dass** an den Innenseiten des Maschinengestells (1) wenigstens eine Werkzeugwechseleinrichtung mit wenigstens einem Werkzeugmagazin befestigt ist.

35. Werkzeugmaschine nach einem der Ansprüche 1 bis 34, **dadurch gekennzeichnet, dass** an den Innenseiten des Maschinengestells (1) ein Späneförderer (11) befestigt ist.

36. Werkzeugmaschine nach Anspruch 35, **dadurch gekennzeichnet, dass** der Späneförderer (11) auf der geschlossenen Bodenplatte des hohlquaderförmigen Maschinengestells (1) angeordnet ist.

37. Werkzeugmaschine nach einem der Ansprüche 1 bis 36, **dadurch gekennzeichnet, dass** an dem Maschinengestell (1) ein Bedientableau befestigt ist.

38. Werkzeugmaschine nach einem der Ansprüche 31 bis 37, **dadurch gekennzeichnet, dass** von dem an dem Querträger (8) in x-Richtung bewegbaren Schlitten (7) zwei Arbeitsspindeln (6) aufgenommen werden.

39. Werkzeugmaschine nach einem der Ansprüche 31 bis 37, **dadurch gekennzeichnet, dass** an der Unterseite des Querträgers (8) zwei in x-Richtung bewegbare Schlitten (7) angeordnet sind, die jeweils wenigstens eine Arbeitsspindel (6) aufnehmen.

## Claims

1. Machine tool with at least one work spindle for accommodating tools for machining workpieces located in a work space, with one machine frame (1) on/in which carriages/machine parts are arranged, which are displaceable along x, y and z axes and which transfer this movement to the work spindle (6), provided with a protective device for movable machine parts (9, 9.0, 9.1), wherein the protective device provided for the machine parts (9.0, 9.1) that can move orthogonally toward each other with intersecting paths of travel is provided with at least two movable covering elements (22, 21) and a movement transmitted from a first machine part (9.1) to the first covering element (22) can be converted into a movement of the second covering element (21) orthogonal to the first movement by means of a functional connection between the covering elements (22, 21) of a protective device, with the first covering element (22) developed as a circular covering disk (21.1) mounted rotatably in the second covering element (21), with said covering disk functionally connected eccentrically with the machine part (9.1) transferring the movement.

2. Machine tool in accordance with Claim 1, wherein the direction of movement of the second covering element (21) of the protective device corresponds with the direction of movement of the second machine part (9.0).

3. Machine tool in accordance with Claim 1 or 2, wherein the second covering element (21) is developed as a quadrangular mask (21.1).

4. Machine tool in accordance with any one of Claims 1 to 3, wherein the covering disk (22.1) can be rotated around the axis of rotation (A1) passing through its centre point.

5. Machine tool in accordance with any one of Claims 1 to 4, wherein the movement of the machine part (9.1) can be transferred to the covering disk (22.1) by means of a flange (6.1) connected non-rotatably with the machine part (9.1), with said flange penetrating the covering disk (22.1) eccentrically and axially parallel to the axis of rotation (A1).

6. Machine tool in accordance with Claim 5, wherein the flange (6.1) penetrates the covering disk (22.1) in a circular manner at a radial distance (b) from its axis of rotation (A1).

7. Machine tool in accordance with Claim 5 or 6, wherein the covering disk (22.1) is mounted rotatably and hermetically sealed on the flange (6.1).

8. Machine tool in accordance with any one of Claims 4 to 7, wherein the periphery of the covering disk (22.1) is mounted in the mask (21.1), with the mask (21.1) having a hole corresponding to the dimensions of the circular covering disk (22.1).

9. Machine tool in accordance with any one of Claims 4 to 8, wherein the covering disk (22.1) is mounted in the mask (21.1) at its midpoint accommodating the axis of rotation (A1).

10. Machine tool in accordance with Claim 9, wherein the mask (21.1) is provided with a hole (B) corresponding to the arcuate path of movement of the flange (6.1) with the covering disk (22.1).

11. Machine tool in accordance with any one of Claims 1 to 10, wherein the mask (21.1) is displaceable along guide tracks (S) arranged orthogonally with respect to the direction of the movement imparted by the machine part (9.1) upon the covering disk (22.1).

12. Machine tool in accordance with any one of the Claims 1 to 11, wherein a rotational movement of the covering disk (22.1) around its axis of rotation (A1) at a particular angle (β) can be initiated by a linear movement of the machine part (9.1) of a particular magnitude (x1, z1).

13. Machine tool in accordance with any one of Claims 1 to 12, wherein the protective device can be employed wherever machine parts (9.0, 9.1) or (9.2, 9.3) that can be moved orthogonally in relation to each other with intersecting paths of motion are arranged.

14. Machine tool in accordance with Claim 13, wherein the movement of the machine part (9.3) can be transferred to the covering disk (22.1) by a work spindle (6.0) connected non-rotatably to the machine part (9.3), with said work spindle penetrating the covering disk (22.1) eccentrically and axially parallel to the axis of rotation (A1).

15. Machine tool in accordance with any one of Claims 1 to 14, wherein provision is made for a workpiece holding device (2) to be mounted between the side walls (1.1, 1.2) that can be rotated around a horizontal axis of rotation (A), with provision being made for tapered recesses (5) in the side walls (1.1, 1.2) for accommodating a motor (M) imparting a rotational movement of the workpiece holding device (2) around the axis of rotation (A), the motor (M) being provided with a stator (12) arranged co-axially with respect to the axis of rotation (A) and having a cavity (12.1), with arcuate guide segments (13) arranged at the outer periphery of said stator to serve as mountings for a rotor carriage (15) bearing the workpiece holding device (2).

16. Machine tool in accordance with Claim 15, wherein the stator (12) of the motor (M) arranged in the recesses (5) of the side walls (1.1, 1.2) has the form of a segment of a circle when viewed in radial cross-section.

17. Machine tool in accordance with Claim 16, wherein the segment of the circle almost has the form of a semicircle, with the centre point of the matching, imagined circle corresponding with the axis of rotation (A).

18. Machine tool in accordance with Claim 16 or 17, wherein the arcuate guide segments (13) are arranged along the arc of the segment of the circle that equates to an angle of rotation (α) around the axis of rotation (A) from 0° to 180°.

19. Machine tool in accordance with any one of Claims 15 to 18, wherein the stator (12) is fastened to the outside of the side wall (1.1, 1.2) by means of its flange shaped end.

20. Machine tool in accordance with any one of Claims 15 to 19, wherein the motor (M) is developed as a torque motor segment.

21. Machine tool in accordance with any one of Claims 15 to 19, wherein the motor (M) is developed as a disc motor segment.

22. Machine tool in accordance with any one of Claims 15 to 21, wherein a secondary (16) of the motor (M) is arranged on the stator (12) and a primary (14) is arranged on the rotor carriage (15) bearing the workpiece holding device (2).

23. Machine tool in accordance with Claim 22, wherein the primary (14) and the secondary (16) are arranged with their active surface parallel to the axis of rotation (A).

24. Machine tool in accordance with Claim 22, wherein the primary (14) and the secondary (16) are arranged with their active surface orthogonal to the axis of rotation (A).

25. Machine tool in accordance with any one of Claims 15 to 24, wherein the rotor carriage (15) that can be moved in the arcuate guide segments (13) by means of guide shoes (15.1) is mounted rotatably around the axis of rotation (A).

26. Machine tool in accordance with any one of Claims 15 to 25, wherein provision is made for the movement of the rotor carriage (15) along the arcuate guide segment (13) to be for an angle of rotation (α) >90° and <180°.

27. Machine tool in accordance with any one of Claims 15 to 26, wherein the stator (12) is encompassed by a flexible covering element (17).

28. Machine tool in accordance with Claim 27, wherein the flexible covering element (17) is formed by a steel or link-belt cover.

29. Machine tool in accordance with any one of Claims 15 to 28, wherein the cavity (12.1) of the stator (12) can be closed by means of a hinge mounted operator window (19).

30. Machine tool in accordance with any one of Claims 15 to 29, wherein the cavity (12.1) of the stator (12) is dimensioned such that a workpiece and/or a workpiece holder can be exchanged through the stator (12).

31. Machine tool in accordance with any one of Claims 1 to 30, wherein the machine frame (1) is developed as a closed hollow cube and one guide part (10) is arranged on each of two facing internal sides of the closed hollow cube-shaped machine frame (1) with carriages/machine parts (9 / 9.0, 9.1) that can be displaced along a y-axis and/or z-axis in order to bilaterally accommodate a cross member (8) extending along an x-axis, with a carriage (7) that is located on the cross member (8), bears the work spindle (6) and can be displaced along the x-axis.

32. Machine tool in accordance with any one of Claims 1 to 31, wherein the work space is located within the machine frame (1) and at the same time the machine frame (1) forms a workspace enclosure and/or a protective housing for all devices specific to the machine.

33. Machine tool in accordance with any one of Claims 1 to 32, wherein at least one pallet exchange facility is fastened to the inside of the machine frame (1).

34. Machine tool in accordance with any one of Claims 1 to 33, wherein at least one pallet exchange facility with at least one tool magazine is fastened to the inside of the machine frame (1).

35. Machine tool in accordance with any one of Claims 1 to 34, wherein a swarf conveyor (11) is attached to the inside of the machine frame (1).

36. Machine tool in accordance with Claim 35, wherein the swarf conveyor (11) is arranged on the closed bottom plate of the hollow cube-shaped machine frame (1).

37. Machine tool in accordance with any one of Claims 1 to 36, wherein a control panel is fastened to the machine frame (1).

38. Machine tool in accordance with any one of Claims 31 to 37, wherein two work spindles (6) are accommodated by the carriage (7) that can be moved on the cross member (8) along an x-axis.

39. Machine tool in accordance with any one of Claims 31 to 37, wherein two carriages (7) that can be displaced along the x-axis are arranged on the underside of the cross member (8), each of which can accommodate at least one work spindle (6).

## Revendications

1. Machine-outil avec au moins une broche de travail destinée à recevoir des outils pour l'usinage de pièces se trouvant dans un espace de travail, avec un bâti de machine (1) dans/sur lequel sont disposés des chariots/parties de machine mobiles dans la direction x, y et/ou z et transmettant ce mouvement à la broche de travail (6), dans laquelle un dispositif de protection pour les parties mobiles de la machine (9, 9.0, 9.1) est prévu, **caractérisée en ce que** le dispositif de protection prévu pour des parties de la machine (9.0, 9.1) mobiles perpendiculairement l'une à l'autre et dont la trajectoire se croise comporte au moins deux éléments de couverture (22, 21) mobile, et un mouvement transmis par une liaison active existant entre les éléments de couverture (22, 21) de la première pièce de la machine (9.1) au premier élément de couverture (22) peut être dévié en un mouvement perpendiculaire à celui-ci du deuxième élément de couverture (21), le premier élément de couverture (22) étant conformé comme une plaque de couverture (21.1) circulaire supportée avec possibilité de rotation dans le deuxième élément de couverture (21), qui est en liaison active en position excentrée avec la partie de la machine (9.1) transmettant le mouvement.

2. Machine-outil selon la revendication 1, **caractérisée en ce que** la direction du mouvement du deuxième élément de couverture (21) du dispositif de protection correspond à la direction de déplacement de la deuxième partie de la machine (9.0).

3. Machine-outil selon la revendication 1 ou 2, **caractérisée en ce que** le deuxième élément de couverture (21) est conçu comme un volet de couverture (21.1) quadrangulaire.

4. Machine-outil selon l'une des revendications 1 à 3, **caractérisée en ce que** la plaque de couverture (22.1) est capable de rotation autour d'un axe de rotation (A1) passant par son centre.

5. Machine-outil selon l'une des revendications 1 à 4, **caractérisée en ce que** le mouvement de la partie de la machine (9.1) peut être transmis à la plaque de couverture (22.1) par un flasque (6.1) relié de manière solidaire en rotation à la partie de la machine (9.1), qui traverse la plaque de couverture (22.1) de façon décentrée et parallèle à l'axe de rotation (A1).

6. Machine-outil selon la revendication 5, **caractérisée en ce que** le flasque (6.1) traverse la plaque de couverture (22.1) selon une forme circulaire, à une certaine distance radiale (b) de son axe de rotation (A1).

7. Machine-outil selon la revendication 5 ou 6, **caractérisée en ce que** la plaque de couverture (22.1) est supportée sur le flasque (6.1) avec possibilité de rotation et avec une étanchéité.

8. Machine-outil selon l'une des revendications 4 à 7, **caractérisée en ce que** la plaque de couverture (22.1) est supportée sur sa circonférence dans le volet de couverture (21.1), lequel volet de couverture (21.1) présente une ouverture correspondant aux dimensions de la plaque de couverture (22.1) circulaire.

9. Machine-outil selon l'une des revendications 4 à 8, **caractérisée en ce que** la plaque de couverture (22.1) est supposée en son centre recevant l'axe de rotation (A1) dans le volet de couverture (21.1).

10. Machine-outil selon la revendication 9, **caractérisée en ce que** le volet de couverture (21.1) présente une ouverture (B) correspondant à la trajectoire circulaire du flasque (6.1) avec la plaque de couverture (22.1).

11. Machine-outil selon l'une des revendications 1 à 10 , **caractérisée en ce que** le volet de couverture (21.1) peut se déplacer le long de rails de guidage (S) perpendiculaires à la direction du mouvement agissant de la partie de la machine (9.1) sur la plaque de couverture (22.1).

12. Machine-outil selon l'une des revendications 1 à 11, **caractérisée en ce qu'**un mouvement linéaire de la partie de la machine (9.1) d'une certaine grandeur (x1, z1) peut provoquer un mouvement de rotation de la plaque de couverture (22.1) autour de son axe de rotation (A1) sur un certain angle (β).

13. Machine-outil selon l'une des revendications 1 à 12, **caractérisée en ce que** le dispositif de protection peut être utilisé partout où des parties de machine (9.0, 9.1) mobiles perpendiculairement l'une à l'autre ou (9.2, 9.3) avec des trajectoires qui se croisent sont disposées.

14. Machine-outil selon la revendication 13, **caractérisée en ce que** le mouvement de la partie de la machine (9.3) peut être transmis à la plaque de couverture (22.1) par une broche de travail (6.0) reliée de manière solidaire en rotation à la partie de la machine (9.3), qui traverse la plaque de couverture (22.1) de façon excentrée et parallèle à l'axe de rotation (A1).

15. Machine-outil selon l'une des revendications 1 à 14, **caractérisée en ce qu'**il est prévu un mécanisme porte-pièce (2) supporté de façon pivotante entre les parois latérales (1.1, 1.2) autour d'un axe de pivotement (A) horizontal, les parois latérales (1.1, 1.2) présentant des ouvertures (5) alignées pour recevoir un moteur (M) réalisant un mouvement pivotant du mécanisme porte-pièce (2) autour de l'axe de pivotement (A), et le moteur (M) présente un stator (12) coaxial de l'axe de pivotement (A) et possédant une cavité (12.1), dont la circonférence extérieure porte des segments de guidage en arc de cercle (13) qui servent à supporter un chariot de rotor (15) portant le mécanisme porte-pièce (2).

16. Machine-outil selon la revendication 15, **caractérisée en ce que** le stator (12) du moteur (M) disposé dans les ouvertures (5) des parois latérales (1.1, 1.2) présente, en coupe radiale, la forme d'un segment de cercle.

17. Machine-outil selon la revendication 16, **caractérisée en ce que** le segment de cercle a approximativement la forme d'un demi-cercle, le centre du cercle complet imaginaire correspondant coïncidant avec l'axe de pivotement (A).

18. Machine-outil selon la revendication 16 ou 17, **caractérisée en ce que** les segments de guidage en arc de cercle (13) sont disposés le long d'un arc de cercle du segment de cercle qui correspond à un angle de pivotement (α) autour de l'axe de pivotement (A) de 0° à 180°.

19. Machine-outil selon l'une des revendications 15 à 18, **caractérisée en ce que** le stator (12) est fixé à son extrémité en forme de flasque sur la face extérieure de la paroi latérale (1.1, 1.2).

20. Machine-outil selon l'une des revendications 15 à 19, **caractérisée en ce que** le moteur (M) est conçu comme un segment de moteur-couple.

21. Machine-outil selon l'une des revendications 15 à 19, **caractérisée en ce que** le moteur (M) est conçu comme un segment de moteur à disque.

22. Machine-outil selon l'une des revendications 15 à 21, **caractérisée en ce qu'**une partie secondaire (16) du moteur (M) est disposée sur le stator (12) et une partie primaire (14) sur le chariot du rotor (15) portant le mécanisme porte-pièce (2).

23. Machine-outil selon la revendication 22, **caractérisée en ce que** la partie primaire (14) et le partie secondaire (16) sont disposées avec leur surface d'action parallèle à l'axe de pivotement (A).

24. Machine-outil selon la revendication 22, **caractérisée en ce que** la partie primaire (14) et la partie secondaire (16) sont disposées avec leur face d'action perpendiculaire à l'axe de pivotement (A).

25. Machine-outil selon l'une des revendications 15 à 24, **caractérisée en ce que** le chariot du rotor (15) mobile au moyen de patins de guidage (15.1) dans les segments de guidage en arc de cercle (13) est supporté avec possibilité de pivotement autour de l'axe de pivotement (A).

26. Machine-outil selon l'une des revendications 15 à 25, **caractérisée en ce que** le mouvement du chariot du rotor (15) le long des segments de guidage en arc de cercle (13) est prévu pour un angle de pivotement (α) > 90° et < 180°.

27. Machine-outil selon l'une des revendications 15 à 26, **caractérisée en ce que** le stator (12) est renfermé par un élément de couverture flexible (17).

28. Machine-outil selon la revendication 27, **caractérisée en ce que** l'élément de couverture flexible (17) est formé par une couverture en bande d'acier ou en bande articulée.

29. Machine-outil selon l'une des revendications 15 à 28, **caractérisée en ce que** la cavité (12.1) du stator (12) peut être fermée par une fenêtre d'inspection (19) supportée avec possibilité de pivotement.

30. Machine-outil selon l'une des revendications 15 à 29, **caractérisée en ce que** la cavité (12.1) du stator (12) est dimensionnée de telle sorte qu'un changement de pièce et/ou un changement de porte-pièce puisse être effectué à travers le stator (12).

31. Machine-outil selon l'une des revendications 1 à 30, **caractérisée en ce que** le bâti de machine (1) est conformé comme un quadrilatère creux fermé, et il est prévu sur deux faces intérieures se faisant face du bâti de machine (1) en forme de quadrilatère creux une partie de guidage (10) avec des chariots ou parties de machine (9/9.0, 9.1) mobiles dans la direction y et/ou la direction z pour recevoir de part et d'autre un support transversal (8) qui s'étend dans la direction x, le support transversal (8) portant un chariot (7) mobile dans la direction x, qui porte la broche de travail (6).

32. Machine-outil selon l'une des revendications 1 à 31, **caractérisée en ce que** l'espace de travail se trouve à l'intérieur du bâti de machine (1) et le bâti de machine (1) forme en même temps le capotage de l'espace de travail et/ou un caisson de protection pour toutes les installations spécifiques de la machine.

33. Machine-outil selon l'une des revendications 1 à 32, **caractérisée en ce qu'**au moins un dispositif de changement de palette est fixé sur les faces intérieures du bâti de machine (1).

34. Machine-outil selon l'une des revendications 1 à 33, **caractérisée en ce qu'**au moins un dispositif de changement d'outil avec au moins un magasin d'outils est fixé sur les faces intérieures du bâti de machine (1).

35. Machine-outil selon l'une des revendications 1 à 34, **caractérisée en ce qu'**un convoyeur de copeaux (11) est fixé sur les faces intérieures du bâti de machine (1).

36. Machine-outil selon la revendication 35, **caractérisée en ce que** le convoyeur de copeaux (11) est disposé sur la plaque de fond fermée du bâti de machine (1) en forme de quadrilatère creux.

37. Machine-outil selon l'une des revendications 1 à 36, **caractérisée en ce qu'**un panneau de commande est fixé sur le bâti de machine (1).

38. Machine-outil selon l'une des revendications 31 à 37, **caractérisée en ce que** le chariot (7) mobile dans la direction x sur le support transversal (8) reçoit deux broches de travail (6).

39. Machine-outil selon l'une des revendications 31 à 37, **caractérisée en ce que** deux chariots (7) mobiles dans la direction x, qui reçoivent chacun au moins une broche de travail (6), sont disposés sur la face inférieure du support transversal (8).
